# EUROPEAN PATENT SPECIFICATION

(11) **EP 4 203 564 B1**
(45) Date of publication and mention of the grant of the patent: **25.03.2026**
(21) Application number: 22207810.7
(22) Date of filing: 16.11.2022
(51) Int. Cl.: H04L 41/5025, H04W 52/02, H04L 12/12, H04L 41/0893, H04L 41/0897, H04L 67/1008, H04L 67/60

(54) **ADAPTIVE CLOUD AUTOSCALING**
ADAPTIVE AUTOMATISCHE CLOUD-SKALIERUNG
MISE À L'ÉCHELLE AUTOMATIQUE ADAPTATIVE DE NUAGE

(30) Priority: 22.12.2021 US 202117559254
(43) Date of publication of application: 28.06.2023
(73) Proprietor: INTEL Corporation, Santa Clara, CA 95054 (US)
(72) Inventor: RAMANATHAN, Palaniappan, 560097 Bengaluru (IN); RAMIA, Kannan Babu, 560037 Bangalore (IN); S, Deepak, 560087 Bangalore (IN); DHANDHALYA, Bhavik, 364002 Bhavnagar (IN); OLIVER, Neal Conrad, Portland, 97229 (US); GUIM BERNAT, Francesc, 08036 Barcelona (ES); METSCH, Thijs, 50321 Bruehl (DE); VERRALL, Timothy, Pleasant Hill, 94523 (US)
(74) Representative: Maiwald GmbH

(56) References cited:
- US-A1- 2021 109 584
- AHVAR EHSAN ET AL: "DECA: A Dynamic Energy Cost and Carbon Emission-Efficient Application Placement Method for Edge Clouds", IEEE ACCESS, IEEE, USA, vol. 9, 27 April 2021 (2021-04-27), pages 70192 - 70213, XP011855178, DOI: 10.1109/ACCESS.2021.3075973
- GHOBAEI-ARANI MOSTAFA ET AL: "Resource Management Approaches in Fog Computing: a Comprehensive Review", JOURNAL OF GRID COMPUTING, SPRINGER NETHERLANDS, DORDRECHT, vol. 18, no. 1, 6 September 2019 (2019-09-06), pages 1 - 42, XP037079356, ISSN: 1570-7873, [retrieved on 20190906], DOI: 10.1007/S10723-019-09491-1
- REDOWAN MAHMUD ET AL: "Application Management in Fog Computing Environments: A Taxonomy, Review and Future Directions", ARXIV.ORG, CORNELL UNIVERSITY LIBRARY, 201 OLIN LIBRARY CORNELL UNIVERSITY ITHACA, NY 14853, 21 May 2020 (2020-05-21), XP081676053
- XU MINXIAN ET AL: "A Self-Adaptive Approach for Managing Applications and Harnessing Renewable Energy for Sustainable Cloud Computing", IEEE TRANSACTIONS ON SUSTAINABLE COMPUTING, IEEE, vol. 6, no. 4, 7 August 2020 (2020-08-07), pages 544 - 558, XP011891956, DOI: 10.1109/TSUSC.2020.3014943

## Description

### BACKGROUND

Edge computing, at a general level, refers to the implementation, coordination, and use of computing and resources at locations closer to the "edge" or collection of "edges" of the network. The purpose of this arrangement is to improve total cost of ownership, reduce application and network latency, reduce network backhaul traffic and associated energy consumption, improve service capabilities, and improve compliance with security or data privacy requirements (especially as compared to conventional cloud computing). Components that can perform edge computing operations ("edge nodes") can reside in whatever location needed by the system architecture or ad hoc service (e.g., in a high performance compute data center or cloud installation; a designated edge node server, an enterprise server, a roadside server, a telecom central office; or a local or peer at-the-edge device being served consuming edge services).

Applications that have been adapted for edge computing include but are not limited to virtualization of traditional network functions (e.g., to operate telecommunications or Internet services) and the introduction of next-generation features and services (e.g., to support 5G network services). Use-cases which are projected to extensively utilize edge computing include connected self-driving cars, surveillance, Internet of Things (IoT) device data analytics, video encoding and analytics, location aware services, device sensing in Smart Cities, among many other network and compute intensive services.

E. Ahran et al, DECA: A Dynamic Energy Cost and Carbon Emission-Efficient Application Placement Method for Edge Clouds, IEEE Access, vol. 9, pages 70192-70213, 2021, describes that as an increasing amount of data processing is done at the network edge, high energy costs and carbon emission of Edge Clouds (ECs) are becoming significant challenges. It is described that the placement of application components (e.g., in the form of containerized microservices) on ECs has an important effect on the energy consumption of ECs, impacting both energy costs and carbon emissions. It is described that due to the geographic distribution of ECs, there is a variety of resources, energy prices and carbon emission rates to consider, which makes optimizing the placement of applications for cost and carbon efficiency even more challenging than in centralized clouds. It is described that the paper presents a Dynamic Energy cost and Carbon emission-efficient Application placement method (DECA) for ECs. It is described that DECA addresses both the initial placement of applications on ECs and the re-optimization of the placement using migrations. It is described that DECA considers geographically varying energy prices and carbon emission rates as well as optimizing the usage of both network and computing resources at the same time. It is described that by combining a prediction-based A* algorithm with a Fuzzy Sets technique, DECA makes intelligent decisions to optimize energy cost and carbon emissions.

US2021/109584A1 describes that various aspects of methods, systems, and use cases include coordinating actions at an edge device based on power production in a distributed edge computing environment. It is described that a method may include identifying a long-term service level agreement (SLA) for a component of an edge device, and determining a list of resources related to the component using the long-term SLA. It is described that the method may include scheduling a task for the component based on the long-term SLA, a current battery level at the edge device, a current energy harvest rate at the edge device, or an amount of power required to complete the task. It is described that a resource of the list of resources may be used to initiate the task, such as according to the scheduling.

Edge computing may, in some scenarios, offer or host a cloud-like distributed service, to offer orchestration and management for applications and coordinated service instances among many types of storage and compute resources. Edge computing is also expected to be closely integrated with existing use cases and technology developed for IoT and Fog/distributed networking configurations, as endpoint devices, clients, and gateways attempt to access network resources and applications at locations closer to the edge of the network.

A new era of compute is emerging in which intensive compute operations are no longer performed primarily in data centers at the core of a network. Rather, with new data transport technologies, such as 5G and new types of fabrics (e.g., network architectures), compute resources may be placed in locations that are remote from a conventional data center. For example, compute resources may be available both in cell towers, base stations, and central offices. Furthermore, given their remote placement (e.g., remote from the core of a network), many of the compute devices that will perform the compute operations may obtain power from solar cells (photovoltaic cells), wind turbines, or other sources that may provide a smaller and less reliable supply of power than a connection to a power distribution grid. As such, the compute capacity at the remote compute locations may fluctuate with the availability of power, leading to an inability to guarantee a fixed level of performance (e.g., a target quality of service, such as a target latency, a target throughput, and/or other performance metrics that may be specified in a service level agreement between a user (client) of the compute resources and a provider of the compute resources).

### SUMMARY

Appended claim 1 defines an edge device. Appended claim 14 defines a method for using processing circuitry of an edge device. The invention and its scope of protection is defined by these independent claims.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates an overview of an edge cloud configuration for edge computing.
FIG. 2 illustrates operational layers among endpoints, an edge cloud, and cloud computing environments.
FIG. 3 illustrates an example approach for networking and services in an edge computing system.
FIG. 4 illustrates deployment of a virtual edge configuration in an edge computing system operated among multiple edge nodes and multiple tenants.
FIG. 5 illustrates various compute arrangements deploying containers in an edge computing system.
FIG. 6 illustrates a compute and communication use case involving mobile access to applications in an edge computing system.
FIG. 7A provides an overview of example components for compute deployed at a compute node in an edge computing system.
FIG. 7B provides a further overview of example components within a computing device in an edge computing system.
FIG. 8 illustrates a renewable energy powered edge appliance device in accordance with some embodiments.
FIG. 9 illustrates an example state sequence for an edge cluster of nodes in accordance with some embodiments.
FIGS. 10A-10B illustrate example edge cluster management block diagrams in accordance with some embodiments.
FIG. 11 illustrates a machine learning engine for adaptive power management in accordance with some embodiments.
FIG. 12 illustrates a flowchart showing a technique for using an edge device to control power states of nodes in an edge cluster in accordance with some embodiments.

### DETAILED DESCRIPTION

Systems and techniques described herein include adaptive cloud autoscaling, for example based on metrics to achieve optimal power settings on an edge cluster, which may be built with heterogenous or homogenous servers. The autoscaling may configure the edge cluster based on power considerations such as battery levels, renewable energy, compute load, or the like. These power considerations may be determined on a per-node basis within the edge cluster, for example by adding or removing nodes from an edge cluster or changing power states of a resource of a node (e.g., using states such as deactivated, fully activated, performance state, such as p-state or c-state, etc.). In some examples, the power considerations may be made on a per-component basis for a node (e.g., only activating power to a set of components of a node, while leaving other node components or capabilities deactivated).

Applications are increasingly being designed, developed, and deployed as loosely coupled services that interact among themselves and with the external entities. A service may be optimized for a single function and may be defined as a logical set of pods or containers for scalability. This allows the services to be scaled independently by scaling in or out of application endpoints as required by a Service Level Agreement (SLA).

Edge clusters are typically constrained in power, cost, and space vectors. They are often deployed under various extreme environment conditions, including the use of renewable (e.g., "green", reduced carbon, or alternative) power sources. Renewable power sources are often dependent on environmental conditions to operate. They may be deployed with backup power sources. In an example, an edge computing cluster may be operated at optimal power levels without compromising service level agreements using the systems and techniques described herein.

In an example, the system and the techniques described herein provide dynamic autoscaling of application instances and resources without compromising SLAs. Traditional autoscaling techniques typically measure server capacity and scale application instances up and down (e.g., by increasing or decreasing the number of application instances) when a server crosses a predefined threshold in the metric. The capacity is typically measured in terms of performance metrics such as central processing unit (CPU) utilization, memory utilization, or application response time. Current solutions scale only on such performance metrics, and do not include power metrics, particularly when scaling down. One example result of not taking power into consideration when scaling down is distributing application instances across multiple nodes in a cluster, requiring more servers or nodes in the cluster to be active than required by the application instances.

The systems and methods described herein may be used to provide power considerations while scaling application instances' resources (e.g., scaling up or down, as well as for consolidating), or add custom metrics for scaling decisions. These custom metrics may be generated via online in-band or out-of-band telemetry systems, or generated through a predictive model system, as described herein.

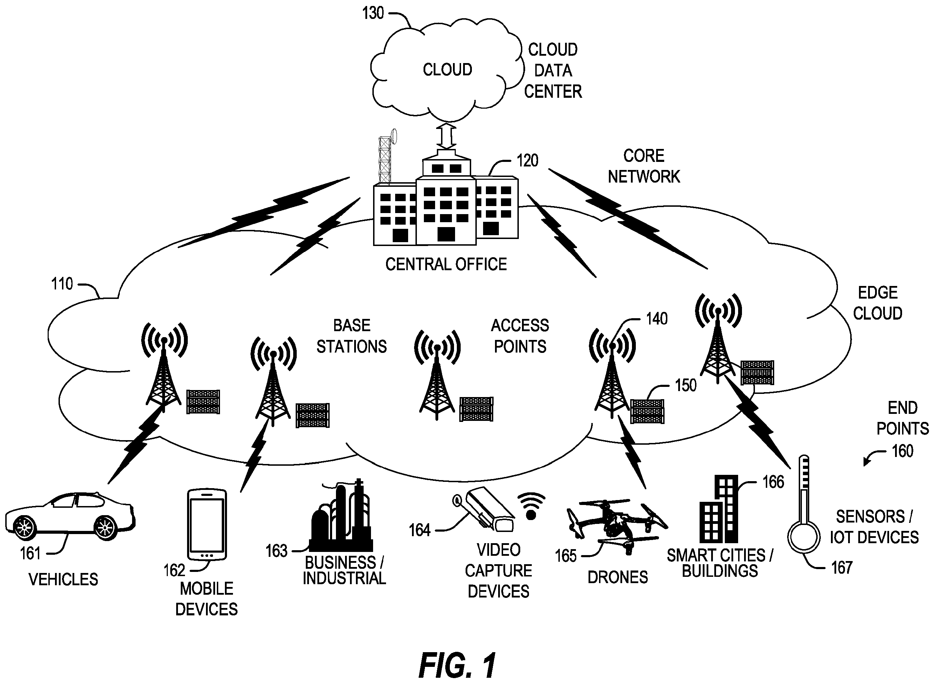

FIG. 1 is a block diagram 100 showing an overview of a configuration for edge computing, which includes a layer of processing referred to in many of the following examples as an "edge cloud". As shown, the edge cloud 110 is co-located at an edge location, such as an access point or base station 140, a local processing hub 150, or a central office 120, and thus may include multiple entities, devices, and equipment instances. The edge cloud 110 is located much closer to the endpoint (consumer and producer) data sources 160 (e.g., autonomous vehicles 161, user equipment 162, business and industrial equipment 163, video capture devices 164, drones 165, smart cities and building devices 166, sensors and IoT devices 167, etc.) than the cloud data center 130. Compute, memory, and storage resources which are offered at the edges in the edge cloud 110 are critical to providing ultra-low latency response times for services and functions used by the endpoint data sources 160 as well as reduce network backhaul traffic from the edge cloud 110 toward cloud data center 130 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

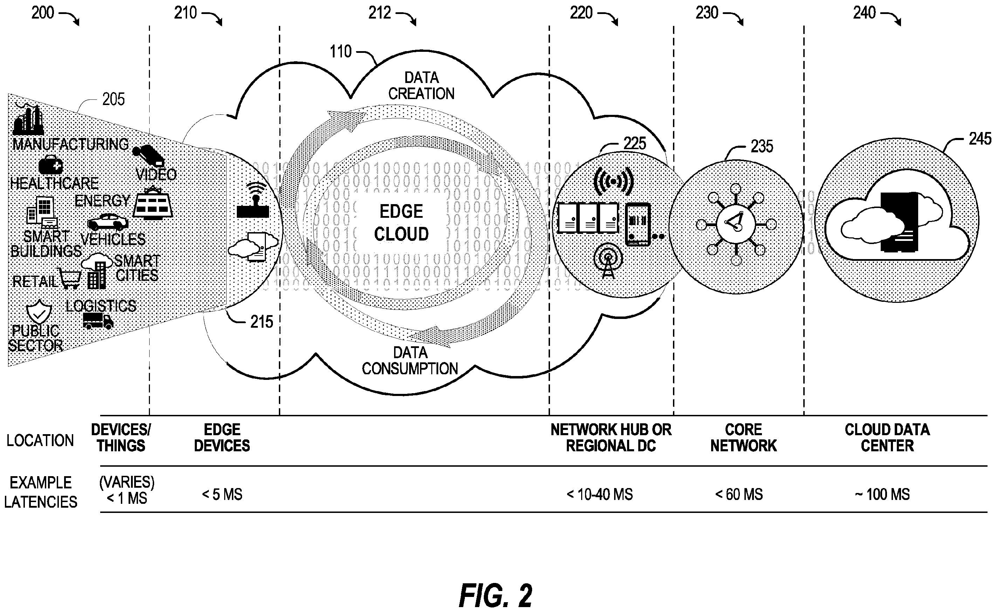

FIG. 2 illustrates operational layers among endpoints, an edge cloud, and cloud computing environments. Specifically, FIG. 2 depicts examples of computational use cases 205, utilizing the edge cloud 110 among multiple illustrative layers of network computing. The layers begin at an endpoint (devices and things) layer 200, which accesses the edge cloud 110 to conduct data creation, analysis, and data consumption activities. The edge cloud 110 may span multiple network layers, such as an edge devices layer 210 having gateways, on-premise servers, or network equipment (nodes 215) located in physically proximate edge systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within the edge cloud 110 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 200, under 5 ms at the edge devices layer 210, to even between 10 to 40 ms when communicating with nodes at the network access layer 220. Beyond the edge cloud 110 are core network 230 and cloud data center 240 layers, each with increasing latency (e.g., between 50-60 ms at the core network layer 230, to 100 or more ms at the cloud data center layer). As a result, operations at a core network data center 235 or a cloud data center 245, with latencies of at least 50 to 100 ms or more, will not be able to accomplish many time-critical functions of the use cases 205. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 235 or a cloud data center 245, a central office or content data network may be considered as being located within a "near edge" layer ("near" to the cloud, having high latency values when communicating with the devices and endpoints of the use cases 205), whereas an access point, base station, on-premise server, or network gateway may be considered as located within a "far edge" layer ("far" from the cloud, having low latency values when communicating with the devices and endpoints of the use cases 205). It will be understood that other categorizations of a particular network layer as constituting a "close", "local", "near", "middle", or "far" edge may be based on latency, distance, number of network hops, or other measurable characteristics, as measured from a source in any of the network layers 200-240.

The various use cases 205 may access resources under usage pressure from incoming streams, due to multiple services utilizing the edge cloud. To achieve results with low latency, the services executed within the edge cloud 110 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 110 may provide the ability to serve and respond to multiple applications of the use cases 205 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 110 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 110 (network layers 200-240), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 110.

As such, the edge cloud 110 is formed from network components and functional features operated by and within edge gateway nodes, edge aggregation nodes, or other edge compute nodes among network layers 210-230. The edge cloud 110 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 110 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

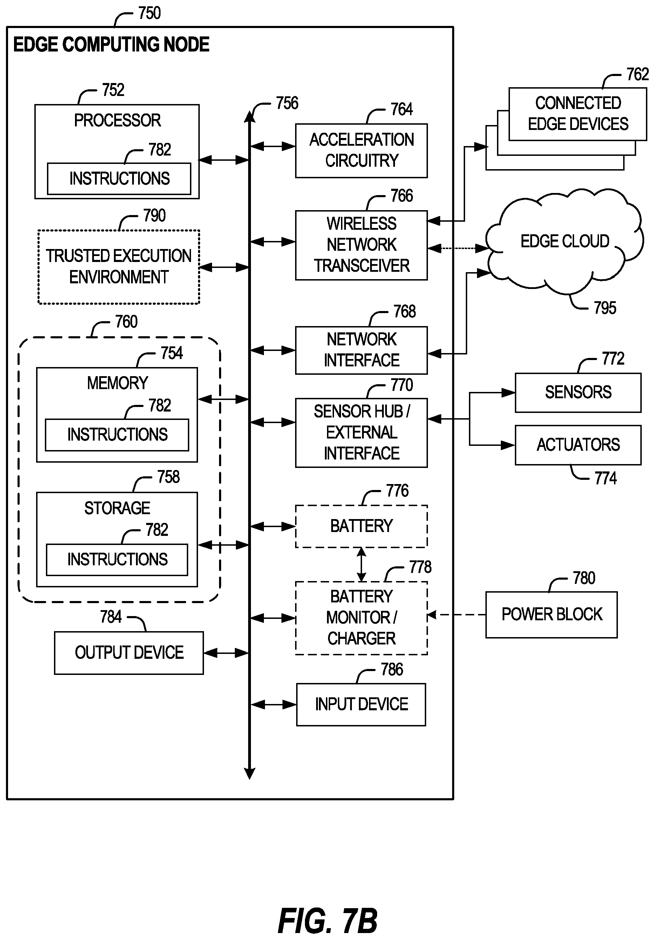

The network components of the edge cloud 110 may be servers, multi-tenant servers, appliance computing devices, and/or any other type of computing devices. For example, the edge cloud 110 may be an appliance computing device that is a self-contained processing system including a housing, case or shell. In some cases, edge devices are devices presented in the network for a specific purpose (e.g., a traffic light), but that have processing or other capacities that may be harnessed for other purposes. Such edge devices may be independent from other networked devices and provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 7B. The edge cloud 110 may also include one or more servers and/or one or more multi-tenant servers. Such a server may implement a virtual computing environment such as a hypervisor for deploying virtual machines, an operating system that implements containers, etc. Such virtual computing environments provide an execution environment in which one or more applications may execute while being isolated from one or more other applications.

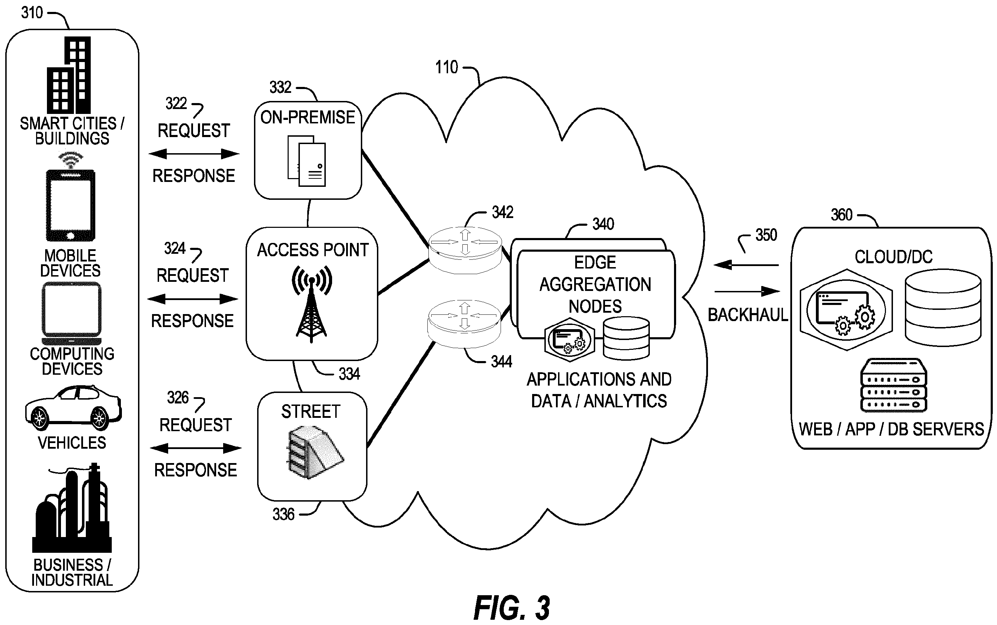

In FIG. 3, various client endpoints 310 (in the form of mobile devices, computers, autonomous vehicles, business computing equipment, industrial processing equipment) exchange requests and responses that are specific to the type of endpoint network aggregation. For instance, client endpoints 310 may obtain network access via a wired broadband network, by exchanging requests and responses 322 through an on-premise network system 332. Some client endpoints 310, such as mobile computing devices, may obtain network access via a wireless broadband network, by exchanging requests and responses 324 through an access point (e.g., cellular network tower) 334. Some client endpoints 310, such as autonomous vehicles may obtain network access for requests and responses 326 via a wireless vehicular network through a street-located network system 336. However, regardless of the type of network access, the TSP may deploy aggregation points 342, 344 within the edge cloud 110 to aggregate traffic and requests. Thus, within the edge cloud 110, the TSP may deploy various compute and storage resources, such as at edge aggregation nodes 340, to provide requested content. The edge aggregation nodes 340 and other systems of the edge cloud 110 are connected to a cloud or data center 360, which uses a backhaul network 350 to fulfill higher-latency requests from a cloud/data center for websites, applications, database servers, etc. Additional or consolidated instances of the edge aggregation nodes 340 and the aggregation points 342, 344, including those deployed on a single server framework, may also be present within the edge cloud 110 or other areas of the TSP infrastructure.

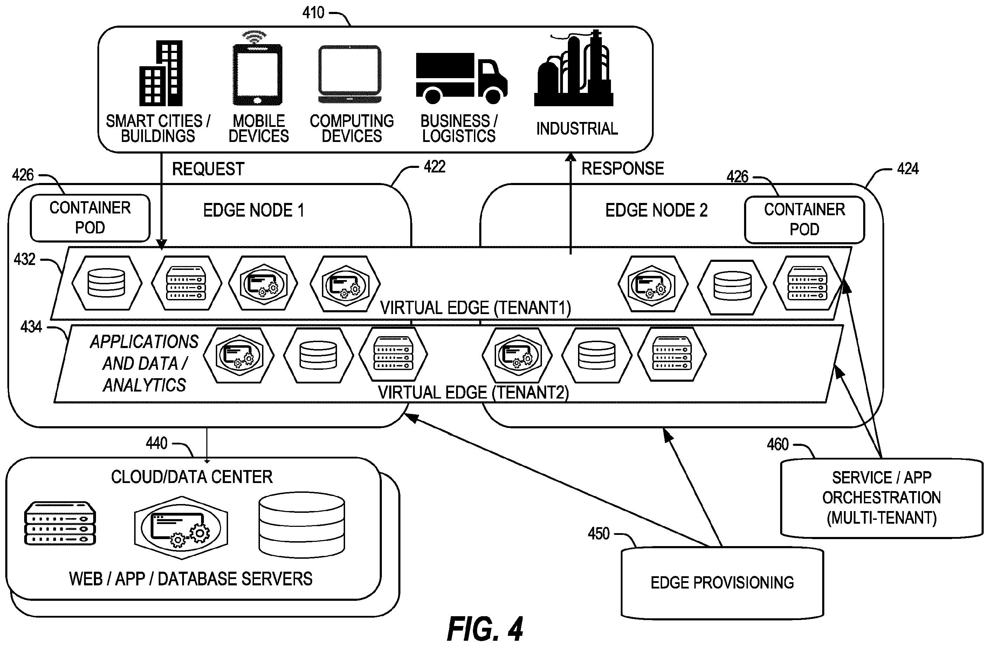

FIG. 4 illustrates deployment and orchestration for virtual edge configurations across an edge computing system operated among multiple edge nodes and multiple tenants. Specifically, FIG. 4 depicts coordination of a first edge node 422 and a second edge node 424 in an edge computing system 400, to fulfill requests and responses for various client endpoints 410 (e.g., smart cities / building systems, mobile devices, computing devices, business/logistics systems, industrial systems, etc.), which access various virtual edge instances. Here, the virtual edge instances 432, 434 provide edge compute capabilities and processing in an edge cloud, with access to a cloud/data center 440 for higher-latency requests for websites, applications, database servers, etc. However, the edge cloud enables coordination of processing among multiple edge nodes for multiple tenants or entities.

In the example of FIG. 4, these virtual edge instances include: a first virtual edge 432, offered to a first tenant (Tenant 1), which offers a first combination of edge storage, computing, and services; and a second virtual edge 434, offering a second combination of edge storage, computing, and services. The virtual edge instances 432, 434 are distributed among the edge nodes 422, 424, and may include scenarios in which a request and response are fulfilled from the same or different edge nodes. The configuration of the edge nodes 422, 424 to operate in a distributed yet coordinated fashion occurs based on edge provisioning functions 450. The functionality of the edge nodes 422, 424 to provide coordinated operation for applications and services, among multiple tenants, occurs based on orchestration functions 460.

It should be understood that some of the devices in 410 are multi-tenant devices where Tenant 1 may function within a tenant1 'slice' while a Tenant 2 may function within a tenant2 slice (and, in further examples, additional or sub-tenants may exist; and each tenant may even be specifically entitled and transactionally tied to a specific set of features all the way day to specific hardware features). A trusted multi-tenant device may further contain a tenant specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 422, 424 may operate as security feature enforcement points for local resources allocated to multiple tenants per node. Additionally, tenant runtime and application execution (e.g., in instances 432, 434) may serve as an enforcement point for a security feature that creates a virtual edge abstraction of resources spanning potentially multiple physical hosting platforms. Finally, the orchestration functions 460 at an orchestration entity may operate as a security feature enforcement point for marshalling resources along tenant boundaries.

Edge computing nodes may partition resources (memory, central processing unit (CPU), graphics processing unit (GPU), interrupt controller, input/output (I/O) controller, memory controller, bus controller, etc.) where respective partitionings may contain a RoT capability and where fan-out and layering according to a DICE model may further be applied to Edge Nodes. Cloud computing nodes consisting of containers, FaaS engines, Servlets, servers, or other computation abstraction may be partitioned according to a DICE layering and fan-out structure to support a RoT context for each. Accordingly, the respective RoTs spanning devices 410, 422, and 440 may coordinate the establishment of a distributed trusted computing base (DTCB) such that a tenant-specific virtual trusted secure channel linking all elements end to end can be established.

Further, it will be understood that a container may have data or workload specific keys protecting its content from a previous edge node. As part of migration of a container, a pod controller at a source edge node may obtain a migration key from a target edge node pod controller where the migration key is used to wrap the container-specific keys. When the container/pod is migrated to the target edge node, the unwrapping key is exposed to the pod controller that then decrypts the wrapped keys. The keys may now be used to perform operations on container specific data. The migration functions may be gated by properly attested edge nodes and pod managers (as described above).

In further examples, an edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 4. For instance, an edge computing system may be configured to fulfill requests and responses for various client endpoints from multiple virtual edge instances (and, from a cloud or remote data center). The use of these virtual edge instances may support multiple tenants and multiple applications (e.g., augmented reality (AR)/virtual reality (VR), enterprise applications, content delivery, gaming, compute offload) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

For instance, each edge node 422, 424 may implement the use of containers, such as with the use of a container "pod" 426, 428 providing a group of one or more containers. In a setting that uses one or more container pods, a pod controller or orchestrator is responsible for local control and orchestration of the containers in the pod. Various edge node resources (e.g., storage, compute, services, depicted with hexagons) provided for the respective edge slices 432, 434 are partitioned according to the needs of each container.

With the use of container pods, a pod controller oversees the partitioning and allocation of containers and resources. The pod controller receives instructions from an orchestrator (e.g., orchestrator 460) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, a pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For instance, the orchestrator 460 may provision an attestation verification policy to local pod controllers that perform attestation verification. If an attestation satisfies a policy for a first tenant pod controller but not a second tenant pod controller, then the second pod could be migrated to a different edge node that does satisfy it. Alternatively, the first pod may be allowed to execute and a different shared pod controller is installed and invoked prior to the second pod executing.

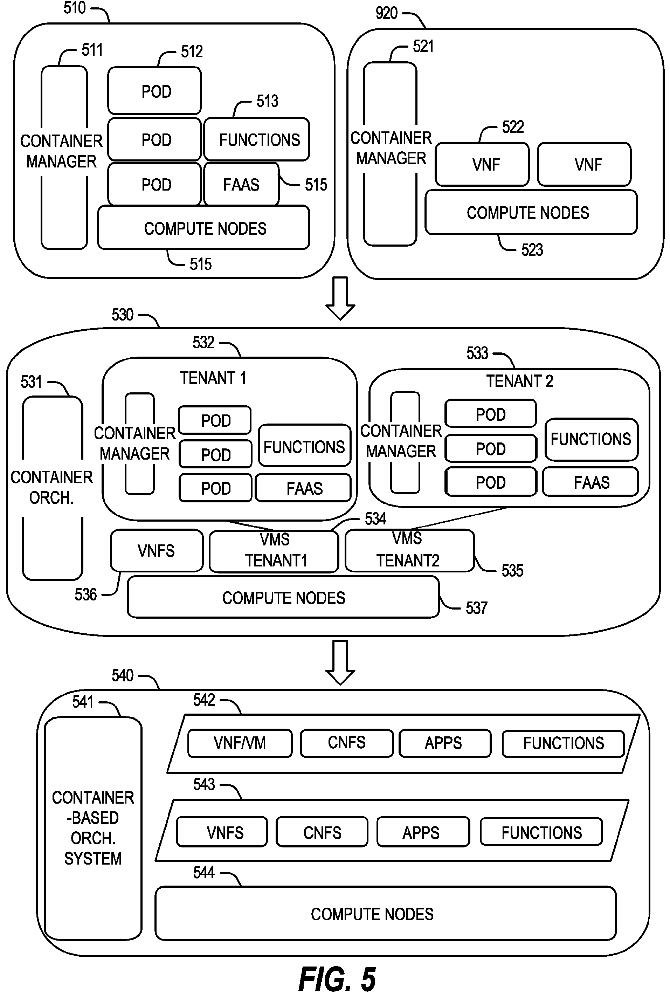

FIG. 5 illustrates additional compute arrangements deploying containers in an edge computing system. As a simplified example, system arrangements 510, 520 depict settings in which a pod controller (e.g., container managers 511, 521, and container orchestrator 531) is adapted to launch containerized pods, functions, and functions-as-a-service instances through execution via compute nodes (515 in arrangement 510), or to separately execute containerized virtualized network functions through execution via compute nodes (523 in arrangement 520). This arrangement is adapted for use of multiple tenants in system arrangement 530 (using compute nodes 537), where containerized pods (e.g., pods 512), functions (e.g., functions 513, VNFs 522, 536), and functions-as-a-service instances (e.g., FaaS instance 514) are launched within virtual machines (e.g., VMs 534, 535 for tenants 532, 533) specific to respective tenants (aside the execution of virtualized network functions). This arrangement is further adapted for use in system arrangement 540, which provides containers 542, 543, or execution of the various functions, applications, and functions on compute nodes 544, as coordinated by an container-based orchestration system 541.

The system arrangements of depicted in FIG. 5 provides an architecture that treats VMs, Containers, and Functions equally in terms of application composition (and resulting applications are combinations of these three ingredients). Each ingredient may involve use of one or more accelerator (FPGA, ASIC) components as a local backend. In this manner, applications can be split across multiple edge owners, coordinated by an orchestrator.

In the context of FIG. 5, the pod controller/container manager, container orchestrator, and individual nodes may provide a security enforcement point. However, tenant isolation may be orchestrated where the resources allocated to a tenant are distinct from resources allocated to a second tenant, but edge owners cooperate to ensure resource allocations are not shared across tenant boundaries. Or, resource allocations could be isolated across tenant boundaries, as tenants could allow "use" via a subscription or transaction/contract basis. In these contexts, virtualization, containerization, enclaves and hardware partitioning schemes may be used by edge owners to enforce tenancy. Other isolation environments may include: bare metal (dedicated) equipment, virtual machines, containers, virtual machines on containers, or combinations thereof.

In further examples, aspects of software-defined or controlled silicon hardware, and other configurable hardware, may integrate with the applications, functions, and services an edge computing system. Software defined silicon may be used to ensure the ability for some resource or hardware ingredient to fulfill a contract or service level agreement, based on the ingredient's ability to remediate a portion of itself or the workload (e.g., by an upgrade, reconfiguration, or provision of new features within the hardware configuration itself).

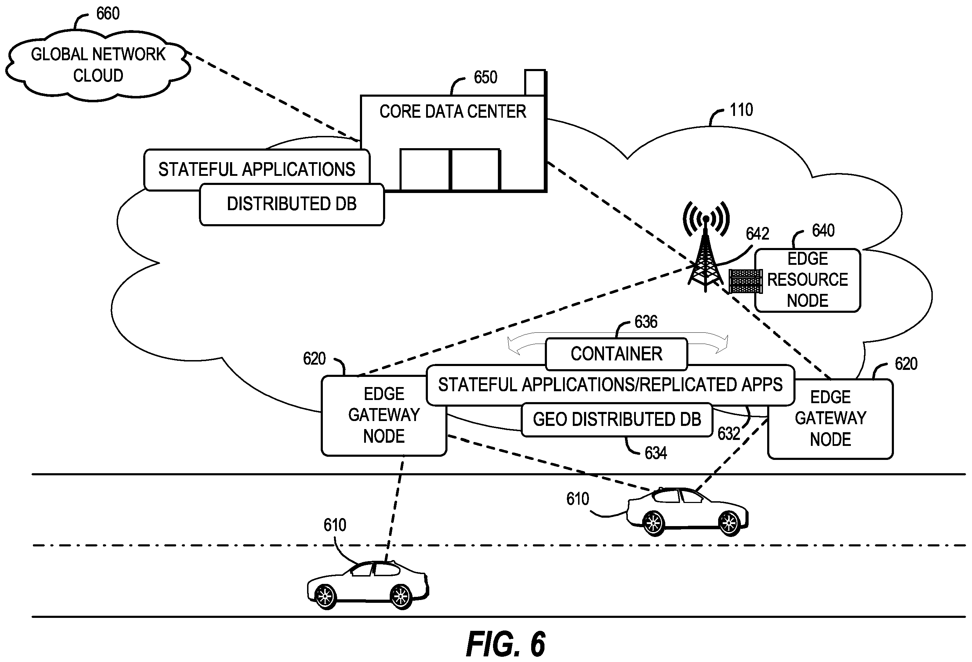

It should be appreciated that the edge computing systems and arrangements discussed herein may be applicable in various solutions, services, and/or use cases involving mobility. As an example, FIG. 6 shows a simplified vehicle compute and communication use case involving mobile access to applications in an edge computing system 600 that implements an edge cloud 110. In this use case, respective client compute nodes 610 may be embodied as in-vehicle compute systems (e.g., in-vehicle navigation and/or infotainment systems) located in corresponding vehicles which communicate with the edge gateway nodes 620 during traversal of a roadway. For instance, the edge gateway nodes 620 may be located in a roadside cabinet or other enclosure built-into a structure having other, separate, mechanical utility, which may be placed along the roadway, at intersections of the roadway, or other locations near the roadway. As respective vehicles traverse along the roadway, the connection between its client compute node 610 and a particular edge gateway device 620 may propagate so as to maintain a consistent connection and context for the client compute node 610. Likewise, mobile edge nodes may aggregate at the high priority services or according to the throughput or latency resolution requirements for the underlying service(s) (e.g., in the case of drones). The respective edge gateway devices 620 include an amount of processing and storage capabilities and, as such, some processing and/or storage of data for the client compute nodes 610 may be performed on one or more of the edge gateway devices 620.

The edge gateway devices 620 may communicate with one or more edge resource nodes 640, which are illustratively embodied as compute servers, appliances or components located at or in a communication base station 642 (e.g., a based station of a cellular network). As discussed above, the respective edge resource nodes 640 include an amount of processing and storage capabilities and, as such, some processing and/or storage of data for the client compute nodes 610 may be performed on the edge resource node 640. For example, the processing of data that is less urgent or important may be performed by the edge resource node 640, while the processing of data that is of a higher urgency or importance may be performed by the edge gateway devices 620 (depending on, for example, the capabilities of each component, or information in the request indicating urgency or importance). Based on data access, data location or latency, work may continue on edge resource nodes when the processing priorities change during the processing activity. Likewise, configurable systems or hardware resources themselves can be activated (e.g., through a local orchestrator) to provide additional resources to meet the new demand (e.g., adapt the compute resources to the workload data).

The edge resource node(s) 640 also communicate with the core data center 650, which may include compute servers, appliances, and/or other components located in a central location (e.g., a central office of a cellular communication network). The core data center 650 may provide a gateway to the global network cloud 660 (e.g., the Internet) for the edge cloud 110 operations formed by the edge resource node(s) 640 and the edge gateway devices 620. Additionally, in some examples, the core data center 650 may include an amount of processing and storage capabilities and, as such, some processing and/or storage of data for the client compute devices may be performed on the core data center 650 (e.g., processing of low urgency or importance, or high complexity).

The edge gateway nodes 620 or the edge resource nodes 640 may offer the use of stateful applications 632 and a geographic distributed database 634. Although the applications 632 and database 634 are illustrated as being horizontally distributed at a layer of the edge cloud 110, it will be understood that resources, services, or other components of the application may be vertically distributed throughout the edge cloud (including, part of the application executed at the client compute node 610, other parts at the edge gateway nodes 620 or the edge resource nodes 640, etc.). Additionally, as stated previously, there can be peer relationships at any level to meet service objectives and obligations. Further, the data for a specific client or application can move from edge to edge based on changing conditions (e.g., based on acceleration resource availability, following the car movement, etc.). For instance, based on the "rate of decay" of access, prediction can be made to identify the next owner to continue, or when the data or computational access will no longer be viable. These and other services may be utilized to complete the work that is needed to keep the transaction compliant and lossless.

In further scenarios, a container 636 (or pod of containers) may be flexibly migrated from an edge node 620 to other edge nodes (e.g., 620, 640, etc.) such that the container with an application and workload does not need to be reconstituted, re-compiled, re-interpreted in order for migration to work. However, in such settings, there may be some remedial or "swizzling" translation operations applied. For example, the physical hardware at node 640 may differ from edge gateway node 620 and therefore, the hardware abstraction layer (HAL) that makes up the bottom edge of the container will be re-mapped to the physical layer of the target edge node. This may involve some form of late-binding technique, such as binary translation of the HAL from the container native format to the physical hardware format, or may involve mapping interfaces and operations. A pod controller may be used to drive the interface mapping as part of the container lifecycle, which includes migration to/from different hardware environments.

The scenarios encompassed by FIG. 6 may utilize various types of mobile edge nodes, such as an edge node hosted in a vehicle (car/truck/tram/train) or other mobile unit, as the edge node will move to other geographic locations along the platform hosting it. With vehicle-to-vehicle communications, individual vehicles may even act as network edge nodes for other cars, (e.g., to perform caching, reporting, data aggregation, etc.). Thus, it will be understood that the application components provided in various edge nodes may be distributed in static or mobile settings, including coordination between some functions or operations at individual endpoint devices or the edge gateway nodes 620, some others at the edge resource node 640, and others in the core data center 650 or global network cloud 660.

In further configurations, the edge computing system may implement FaaS computing capabilities through the use of respective executable applications and functions. In an example, a developer writes function code (e.g., "computer code" herein) representing one or more computer functions, and the function code is uploaded to a FaaS platform provided by, for example, an edge node or data center. A trigger such as, for example, a service use case or an edge processing event, initiates the execution of the function code with the FaaS platform.

In an example of FaaS, a container is used to provide an environment in which function code (e.g., an application which may be provided by a third party) is executed. The container may be any isolated-execution entity such as a process, a Docker or Kubernetes container, a virtual machine, etc. Within the edge computing system, various datacenter, edge, and endpoint (including mobile) devices are used to "spin up" functions (e.g., activate and/or allocate function actions) that are scaled on demand. The function code gets executed on the physical infrastructure (e.g., edge computing node) device and underlying virtualized containers. Finally, container is "spun down" (e.g., deactivated and/or deallocated) on the infrastructure in response to the execution being completed.

Further aspects of FaaS may enable deployment of edge functions in a service fashion, including a support of respective functions that support edge computing as a service (Edge-as-a-Service or "EaaS"). Additional features of FaaS may include: a granular billing component that enables customers (e.g., computer code developers) to pay only when their code gets executed; common data storage to store data for reuse by one or more functions; orchestration and management among individual functions; function execution management, parallelism, and consolidation; management of container and function memory spaces; coordination of acceleration resources available for functions; and distribution of functions between containers (including "warm" containers, already deployed or operating, versus "cold" which require initialization, deployment, or configuration).

The edge computing system 600 can include or be in communication with an edge provisioning node 644. The edge provisioning node 644 can distribute software such as the example computer readable instructions 782 of FIG. 7B, to various receiving parties for implementing any of the methods described herein. The example edge provisioning node 644 may be implemented by any computer server, home server, content delivery network, virtual server, software distribution system, central facility, storage device, storage node, data facility, cloud service, etc., capable of storing and/or transmitting software instructions (e.g., code, scripts, executable binaries, containers, packages, compressed files, and/or derivatives thereof) to other computing devices. Component(s) of the example edge provisioning node 644 may be located in a cloud, in a local area network, in an edge network, in a wide area network, on the Internet, and/or any other location communicatively coupled with the receiving party(ies). The receiving parties may be customers, clients, associates, users, etc. of the entity owning and/or operating the edge provisioning node 644. For example, the entity that owns and/or operates the edge provisioning node 644 may be a developer, a seller, and/or a licensor (or a customer and/or consumer thereof) of software instructions such as the example computer readable instructions 782 of FIG. 7B. The receiving parties may be consumers, service providers, users, retailers, OEMs, etc., who purchase and/or license the software instructions for use and/or re-sale and/or sub-licensing.

In an example, edge provisioning node 644 includes one or more servers and one or more storage devices. The storage devices host computer readable instructions such as the example computer readable instructions 782 of FIG. 7B, as described below. Similarly to edge gateway devices 620 described above, the one or more servers of the edge provisioning node 644 are in communication with a base station 642 or other network communication entity. In some examples, the one or more servers are responsive to requests to transmit the software instructions to a requesting party as part of a commercial transaction. Payment for the delivery, sale, and/or license of the software instructions may be handled by the one or more servers of the software distribution platform and/or via a third party payment entity. The servers enable purchasers and/or licensors to download the computer readable instructions 782 from the edge provisioning node 644. For example, the software instructions, which may correspond to the example computer readable instructions 782 of FIG. 7B, may be downloaded to the example processor platform/s, which is to execute the computer readable instructions 782 to implement the methods described herein.

In some examples, the processor platform(s) that execute the computer readable instructions 782 can be physically located in different geographic locations, legal jurisdictions, etc. In some examples, one or more servers of the edge provisioning node 644 periodically offer, transmit, and/or force updates to the software instructions (e.g., the example computer readable instructions 782 of FIG. 7B) to ensure improvements, patches, updates, etc. are distributed and applied to the software instructions implemented at the end user devices. In some examples, different components of the computer readable instructions 782 can be distributed from different sources and/or to different processor platforms; for example, different libraries, plug-ins, components, and other types of compute modules, whether compiled or interpreted, can be distributed from different sources and/or to different processor platforms. For example, a portion of the software instructions (e.g., a script that is not, in itself, executable) may be distributed from a first source while an interpreter (capable of executing the script) may be distributed from a second source.

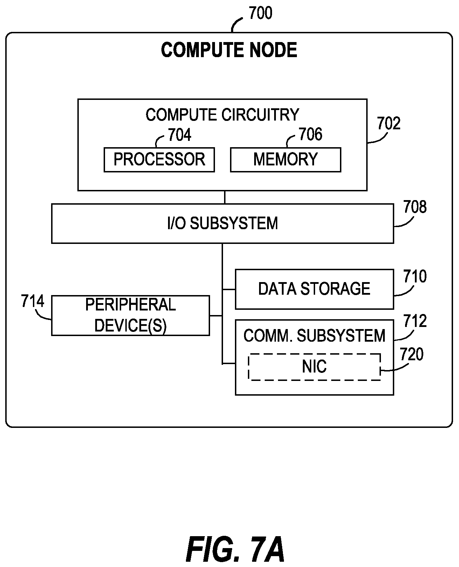

In further examples, any of the compute nodes or devices discussed with reference to the present edge computing systems and environment may be fulfilled based on the components depicted in FIGS. 7A and 7B. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 7A, an edge compute node 700 includes a compute engine (also referred to herein as "compute circuitry") 702, an input/output (I/O) subsystem 708, data storage 710, a communication circuitry subsystem 712, and, optionally, one or more peripheral devices 714. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 700 may be embodied as any type of engine, device, or collection of devices capable of performing various compute functions. In some examples, the compute node 700 may be embodied as a single device such as an integrated circuit, an embedded system, a field-programmable gate array (FPGA), a system-on-a-chip (SOC), or other integrated system or device. In the illustrative example, the compute node 700 includes or is embodied as a processor 704 and a memory 706. The processor 704 may be embodied as any type of processor capable of performing the functions described herein (e.g., executing an application). For example, the processor 704 may be embodied as a multi-core processor(s), a microcontroller, a processing unit, a specialized or special purpose processing unit, or other processor or processing/controlling circuit.

In some examples, the processor 704 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 704 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 704 may work in coordination with each other to execute many types of operations and instructions within and on behalf of the compute node 700.

The memory 706 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 706 may be integrated into the processor 704. The memory 706 may store various software and data used during operation such as one or more applications, data operated on by the application(s), libraries, and drivers.

The compute circuitry 702 is communicatively coupled to other components of the compute node 700 via the I/O subsystem 708, which may be embodied as circuitry and/or components to facilitate input/output operations with the compute circuitry 702 (e.g., with the processor 704 and/or the main memory 706) and other components of the compute circuitry 702. For example, the I/O subsystem 708 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 708 may form a portion of a system-on-a-chip (SoC) and be incorporated, along with one or more of the processor 704, the memory 706, and other components of the compute circuitry 702, into the compute circuitry 702.

The one or more illustrative data storage devices 710 may be embodied as any type of devices configured for short-term or long-term storage of data such as, for example, memory devices and circuits, memory cards, hard disk drives, solid-state drives, or other data storage devices. Individual data storage devices 710 may include a system partition that stores data and firmware code for the data storage device 710. Individual data storage devices 710 may also include one or more operating system partitions that store data files and executables for operating systems depending on, for example, the type of compute node 700.

The communication circuitry 712 may be embodied as any communication circuit, device, or collection thereof, capable of enabling communications over a network between the compute circuitry 702 and another compute device (e.g., an edge gateway of an implementing edge computing system). The communication circuitry 712 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 712 includes a network interface controller (NIC) 720, which may also be referred to as a host fabric interface (HFI). The NIC 720 may be embodied as one or more add-in-boards, daughter cards, network interface cards, controller chips, chipsets, or other devices that may be used by the compute node 700 to connect with another compute device (e.g., an edge gateway node). In some examples, the NIC 720 may be embodied as part of a system-on-a-chip (SoC) that includes one or more processors, or included on a multichip package that also contains one or more processors. In some examples, the NIC 720 may include a local processor (not shown) and/or a local memory (not shown) that are both local to the NIC 720. In such examples, the local processor of the NIC 720 may be capable of performing one or more of the functions of the compute circuitry 702 described herein. Additionally, or alternatively, in such examples, the local memory of the NIC 720 may be integrated into one or more components of the client compute node at the board level, socket level, chip level, and/or other levels.

Additionally, in some examples, a respective compute node 700 may include one or more peripheral devices 714. Such peripheral devices 714 may include any type of peripheral device found in a compute device or server such as audio input devices, a display, other input/output devices, interface devices, and/or other peripheral devices, depending on the particular type of the compute node 700. In further examples, the compute node 700 may be embodied by a respective edge compute node (whether a client, gateway, or aggregation node) in an edge computing system or like forms of appliances, computers, subsystems, circuitry, or other components.

In a more detailed example, FIG. 7B illustrates a block diagram of an example of components that may be present in an edge computing node 750 for implementing the techniques (e.g., operations, processes, methods, and methodologies) described herein. This edge computing node 750 provides a closer view of the respective components of node 700 when implemented as or as part of a computing device (e.g., as a mobile device, a base station, server, gateway, etc.). The edge computing node 750 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 750, or as components otherwise incorporated within a chassis of a larger system.

The edge computing device 750 may include processing circuitry in the form of a processor 752, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 752 may be a part of a system on a chip (SoC) in which the processor 752 and other components are formed into a single integrated circuit, or a single package, such as the Edison^{™} or Galileo^{™} SoC boards from Intel Corporation, Santa Clara, California. As an example, the processor 752 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 752 and accompanying circuitry may be provided in a single socket form factor, multiple socket form factor, or a variety of other formats, including in limited hardware configurations or configurations that include fewer than all elements shown in FIG. 7B.

The processor 752 may communicate with a system memory 754 over an interconnect 756 (e.g., a bus). Any number of memory devices may be used to provide for a given amount of system memory. As examples, the memory 754 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 758 may also couple to the processor 752 via the interconnect 756. In an example, the storage 758 may be implemented via a solid-state disk drive (SSDD). Other devices that may be used for the storage 758 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 758 may be on-die memory or registers associated with the processor 752. However, in some examples, the storage 758 may be implemented using a micro hard disk drive (HDD). Further, any number of new technologies may be used for the storage 758 in addition to, or instead of, the technologies described, such resistance change memories, phase change memories, holographic memories, or chemical memories, among others.

The components may communicate over the interconnect 756. The interconnect 756 may include any number of technologies, including industry standard architecture (ISA), extended ISA (EISA), peripheral component interconnect (PCI), peripheral component interconnect extended (PCIx), PCI express (PCIe), or any number of other technologies. The interconnect 756 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 756 may couple the processor 752 to a transceiver 766, for communications with the connected edge devices 762. The transceiver 766 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 762. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 766 (or multiple transceivers) may communicate using multiple standards or radios for communications at a different range. For example, the edge computing node 750 may communicate with close devices, e.g., within about 10 meters, using a local transceiver based on Bluetooth Low Energy (BLE), or another low power radio, to save power. More distant connected edge devices 762, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 766 (e.g., a radio transceiver) may be included to communicate with devices or services in the edge cloud 795 via local or wide area network protocols. The wireless network transceiver 766 may be a low-power wide-area (LPWA) transceiver that follows the IEEE 802.15.4, or IEEE 802.15.4g standards, among others. The edge computing node 750 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 766, as described herein. For example, the transceiver 766 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 766 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 768 may be included to provide a wired communication to nodes of the edge cloud 795 or to other devices, such as the connected edge devices 762 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 768 may be included to enable connecting to a second network, for example, a first NIC 768 providing communications to the cloud over Ethernet, and a second NIC 768 providing communications to other devices over another type of network.

Given the variety of types of applicable communications from the device to another component or network, applicable communications circuitry used by the device may include or be embodied by any one or more of components 764, 766, 768, or 770. Accordingly, in various examples, applicable means for communicating (e.g., receiving, transmitting, etc.) may be embodied by such communications circuitry.

The edge computing node 750 may include or be coupled to acceleration circuitry 764, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 756 may couple the processor 752 to a sensor hub or external interface 770 that is used to connect additional devices or subsystems. The devices may include sensors 772, such as accelerometers, level sensors, flow sensors, optical light sensors, camera sensors, temperature sensors, global navigation system (e.g., GPS) sensors, pressure sensors, barometric pressure sensors, and the like. The hub or interface 770 further may be used to connect the edge computing node 750 to actuators 774, such as power switches, valve actuators, an audible sound generator, a visual warning device, and the like.

In some optional examples, various input/output (I/O) devices may be present within or connected to, the edge computing node 750. For example, a display or other output device 784 may be included to show information, such as sensor readings or actuator position. An input device 786, such as a touch screen or keypad may be included to accept input. An output device 784 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 750. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 776 may power the edge computing node 750, although, in examples in which the edge computing node 750 is mounted in a fixed location, it may have a power supply coupled to an electrical grid, or the battery may be used as a backup or for temporary capabilities. The battery 776 may be a lithium ion battery, or a metal-air battery, such as a zinc-air battery, an aluminum-air battery, a lithium-air battery, and the like.

A battery monitor/charger 778 may be included in the edge computing node 750 to track the state of charge (SoCh) of the battery 776, if included. The battery monitor/charger 778 may be used to monitor other parameters of the battery 776 to provide failure predictions, such as the state of health (SoH) and the state of function (SoF) of the battery 776. The battery monitor/charger 778 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 778 may communicate the information on the battery 776 to the processor 752 over the interconnect 756. The battery monitor/charger 778 may also include an analog-to-digital (ADC) converter that enables the processor 752 to directly monitor the voltage of the battery 776 or the current flow from the battery 776. The battery parameters may be used to determine actions that the edge computing node 750 may perform, such as transmission frequency, mesh network operation, sensing frequency, and the like.

A power block 780, or other power supply coupled to a grid, may be coupled with the battery monitor/charger 778 to charge the battery 776. In some examples, the power block 780 may be replaced with a wireless power receiver to obtain the power wirelessly, for example, through a loop antenna in the edge computing node 750. A wireless battery charging circuit, such as an LTC4020 chip from Linear Technologies of Milpitas, California, among others, may be included in the battery monitor/charger 778. The specific charging circuits may be selected based on the size of the battery 776, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 758 may include instructions 782 in the form of software, firmware, or hardware commands to implement the techniques described herein. Although such instructions 782 are shown as code blocks included in the memory 754 and the storage 758, it may be understood that any of the code blocks may be replaced with hardwired circuits, for example, built into an application specific integrated circuit (ASIC).

In an example, the instructions 782 provided via the memory 754, the storage 758, or the processor 752 may be embodied as a non-transitory, machine-readable medium 760 including code to direct the processor 752 to perform electronic operations in the edge computing node 750. The processor 752 may access the non-transitory, machine-readable medium 760 over the interconnect 756. For instance, the non-transitory, machine-readable medium 760 may be embodied by devices described for the storage 758 or may include specific storage units such as optical disks, flash drives, or any number of other hardware devices. The non-transitory, machine-readable medium 760 may include instructions to direct the processor 752 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 782 on the processor 752 (separately, or in combination with the instructions 782 of the machine readable medium 760) may configure execution or operation of a trusted execution environment (TEE) 790. In an example, the TEE 790 operates as a protected area accessible to the processor 752 for secure execution of instructions and secure access to data. Various implementations of the TEE 790, and an accompanying secure area in the processor 752 or the memory 754 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 750 through the TEE 790 and the processor 752.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magnetooptical disks; and CD-ROM and DVD-ROM disks. The instructions embodied by a machine-readable medium may further be transmitted or received over a communications network using a transmission medium via a network interface device utilizing any one of a number of transfer protocols (e.g., Hypertext Transfer Protocol (HTTP)).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

As discussed above, edge computing involves many scenarios where computing is performed at the edge, such as closer to users such as base stations/cell towers and central offices. An edge system may proactively react based on predictions (e.g., estimates) or changes to power availability, workload constraints, scheduling, etc. For example, power may be added when network bandwidth or some sensor bandwidth increases. In an example, workloads are executed when power is less expensive or when power is generated from renewable sources. A node may be scheduled to operate (e.g., execute a workload) at a frequency and power level that is the most efficient or more efficient than a schedule not taking the power level into account. For example, a CPU may be overclocked to run at a fast rate, but doing so may generate heat at a rate higher than if the frequency remained at a lower rate. The tradeoff of heat (e.g., excess power usage) to available power may be used to determine parameters of CPU clock frequency or timing of when a particular workload is executed (e.g., at night when ambient temperature is cooler). The more or most efficient power to heat window may be used as criteria for scheduling workloads.

Heat causes an issue in an edge device because more power is required to cool components. For example, as the CPU heats up, more fan power or other cooling action is needed to keep the CPU within operating temperatures. When operating during periods of high ambient heat, more power may be required to cool the components.

Individual control of power output to or used by a component may be used to manage power consumption. For example, new power states for one, a set, or all components of FIG. 7B, for example, may be used to reduce power consumption. For example, a power state for controlling power may be generated for any of the processor 752, the machine-readable medium 760 (e.g., the memory 754), the output device 784, the acceleration circuitry 764, the wireless network transceiver 766, the network interface 768, the input device 786, the sensor hub / external interface 770, or components attached to the edge computing node 750 (e.g., connected edge devices 762, sensors 772, or actuators 774).

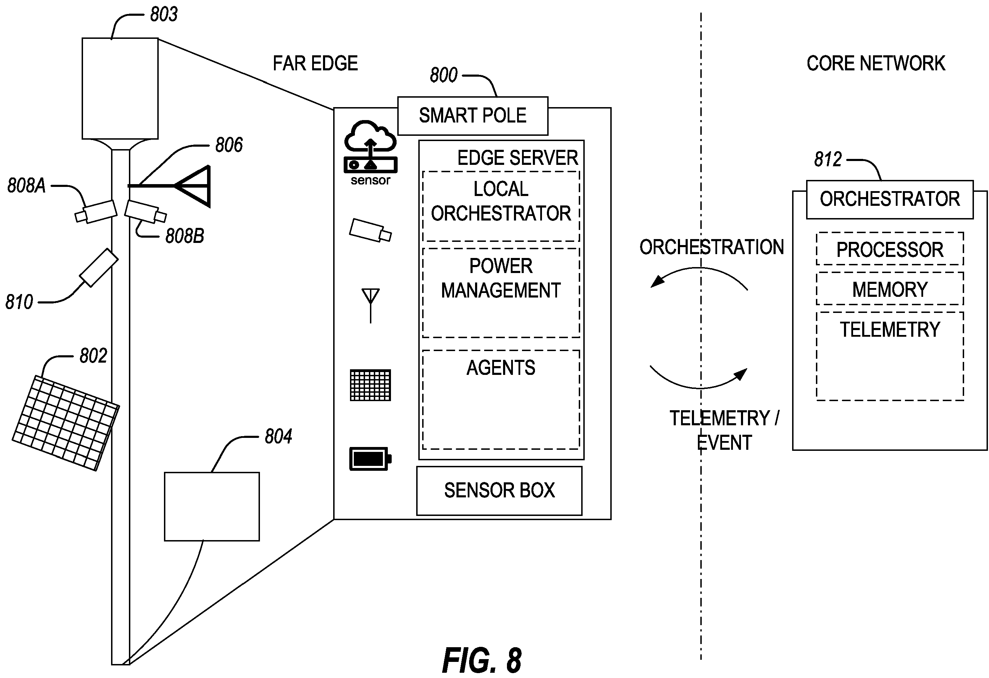

The systems and techniques described herein provide power management or optimization while maintaining service level agreements or service level objectives. These types of power management or optimization may be used with a renewable energy edge appliance (e.g., a base station powered by solar power, for example). FIG. 8 shows a green edge appliance that includes advanced power management techniques and auto-scaling based on object driven orchestration. FIG. 8 may include an example device or devices, such as corresponding to the edge devices layer 210, the layer 212, or the network access layer 220 of FIG. 2 described above.

FIG. 8 illustrates a renewable energy powered edge appliance device 800 in accordance with some embodiments. The renewable energy powered edge appliance device 800 includes a renewable power source (e.g., a solar power collector 802 or a wind power collector 803), a battery 804, and an antenna 806 (e.g., a backhaul connection component). The renewable energy powered edge appliance device 800 may include one or more optional components such as a camera (e.g., 808A, 808B) or a vehicle connection 810 (e.g., V2X transceiver). In an example, the renewable energy powered edge appliance device 800 may have no connection to a power grid or no physical connection to a network, in other examples, the edge appliance device 800 may use grid energy as a backup or alternative to the green power. The renewable energy powered edge appliance device 800 may be secured with a lock and include ventilation.

The various components of the renewable energy powered edge appliance device 800 do not all need to be present at an edge device. Other configurations are possible, the components and arrangements of the renewable energy powered edge appliance device 800 shown in FIG. 8 are one example set of components and arrangements. For example, a different power supply may be used (e.g., wind power), more or fewer cameras, batteries, or communication components may be used, etc.

In an example, the renewable energy powered edge appliance device 800 is a node in an edge network. Edge computing involves usage of compute nodes (e.g., an edge device, a set of edge devices, one or more CPUs arranged to provide a compute resource as a collective unit, or the like) in constrained environments. In an example, nodes are green edge deployments based on solar power. In some examples, these green edge deployments may be based on standard platforms, as opposed to specialized configurations (e.g., a low-power configuration), for ease-of-use, adaptability, SW usage, or configurability to include accelerators, etc. Power is a constraint that becomes a factor in such scenarios, such as while prioritizing and scheduling different tasks.

There are several factors that are considered by the renewable energy powered edge appliance device 800 while evaluating the impact on power consumption for scheduling or prioritizing tasks. For example, the renewable energy powered edge appliance device 800 may consider compute resources being used, including cores, programmable logic, accelerators, and the frequencies or speeds of operation of these resources, memory resources being used, including DRAM, DCPMM (e.g., Intel Optane memory), and their associated capacity or bandwidth configurations, storage or network resources being used, or the like. In an example, the power considerations may be applied to software components. There are many types of software components that may be executed on the renewable energy powered edge appliance device 800, including for example, edge services being offered to edge users (for example, a service offered to autonomous cars or a service to drones), system software components, which may span various parts of the software stack, such as OS, driver, or application SW that do not form part of services, etc. In some examples, learning components may move or migrate to other systems.

The renewable energy powered edge appliance device 800 is illustrated in FIG. 8 with components (e.g., optional components), such as sensors, cameras, antennas, solar power, wind power, batteries, a local orchestrator, power management component, agent communication or information storage, sensor box communication or information storage, or the like. The renewable energy powered edge appliance device 800 may communicate with another device 812, such as a core network (e.g., a near edge or central office) device, which may include an orchestrator (e.g., with processor, memory, etc., or telemetry). In some examples, The other device 812 may be an edge device that operates with power from a power grid (e.g., non-renewable). In some examples, the other device 812 may be connected by a wired connection to a network. The renewable energy powered edge appliance device 800 and the other device 821 may exchange orchestration, telemetry, or event data for coordinating actions of the renewable energy powered edge appliance device 800 and other edge devices. In an example, power or thermal constraints may place a resource of a node into power saving modes or shut down resources, which may not be a maximized use of the resources.

The present systems and techniques provide a way to automatically scale services and node instances in an edge cluster, for example with the renewable energy powered edge appliance device 800 being a node of the edge cluster. The scaling service may use existing or predicted load conditions compared to SLA requirements, while operating the edge cluster at an optimal power level. In an examples, edge devices such as the renewable energy powered edge appliance device 800 may operate independently of a central office to optimize power loads and resources. In another example, the other device 812 may coordinate to assign an edge cluster or control individual node power usage. In some examples, the renewable energy powered edge appliance device 800 may be a node of an edge cluster and may control power levels for other nodes of the edge cluster.

A workload or application instance auto-scale operation may be used to automatically scale up or down or in or out additional instances of an application or service (e.g., among nodes of an edge cluster) to satisfy SLA requirements based on given metrics. The auto-scaler may use user-specified threshold values for each desired metric. The auto-scaler may monitor the edge cluster using existing or predicted values of custom metrics to make autoscaling decisions. Scaling up may include adding a node, activating a component of a node, or changing a power state of a portion of a node, and scaling down may include removing a node, deactivating a component of a node, or changing a power state of a portion of a node. Scaling up or down may be called vertical scaling. Scaling in or out may be called horizontal scaling.

A node instance auto-scale operation may automatically scale worker nodes from a pool of hetero or homogenous servers in an edge cluster. The auto-scaler may use edge provider interfaces to enable dynamic configuration of hetero or homogeneous edge cluster nodes during autoscaling.

An orchestrator scheduler may use scheduler plugins to enable active workload instances to be assigned to a subset of available worker nodes of an edge cluster. This allows a maximum number of server nodes in the cluster to be kept in a power saving mode.

An orchestrator application instance replication controller may select a young or new application instance for a scale down operation. This enables scale down of node instances from the cluster and maintains the scaled down nodes in a power saving mode.

The orchestrator may use dynamic networking to divert external traffic to internal application instances or update routing policies as per the migration. This ensures that the cluster operation continues to function normally while the application and node instances are scaled to reduce power consumption, without compromising the required SLA.

The systems and techniques described herein may be implemented in available container orchestrators, such as a Kubernetes orchestrator. For example, using a container as discussed above with respect to FIG. 6.

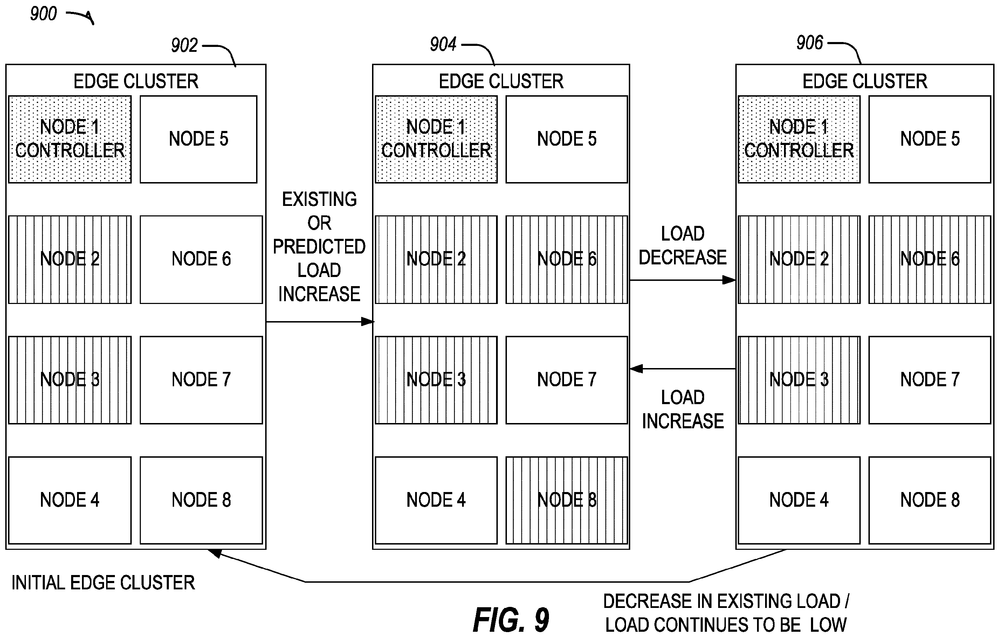

FIG. 9 illustrates an example state sequence diagram 900 for an edge cluster of nodes in accordance with some embodiments. The diagram 900 illustrates various example states of an edge cluster over time.

The initial edge cluster of diagram 900 may be an edge cluster initiated with a minimal number of worker nodes in initial state 902. As application instances are scaled up or down based on existing or predicted metrics, new nodes may be added or removed. For example, the second state 904 shows nodes 6 and 8 activated in the edge cluster. In an example, adding or removing a node includes activating or deactivating the node, or changing a power state of the node or a component of the node. The edge cluster may not physically add or remove nodes or connections to nodes, but instead may activate or deactivate node power states. A third state 906 of the edge cluster is shown in diagram 900, representing a state where node 8 has been deactivated or powered down in the edge cluster. The nodes in the edge location that are not part of the cluster may be kept in a power down or sleep mode to save power.

When new replicas are not schedulable in the currently active nodes of the edge cluster, then a node may be selected and added to the edge cluster for running a new or increased usage application instance. A node may be scaled down when metrics are below a threshold set for the edge cluster for a configured period.

In some examples, a net change of active or powered nodes may remain the same, but nodes may be activated and deactivated. For example, from initial state 902, node 3 may be deactivated while node 5 is activated, leaving three nodes still active, but with 5 traded for 3. This may be done in some examples to use particular resources of a node (e.g., specialized hardware).

An application instance auto-scaler may be configured with threshold values for the metrics used by the edge cluster and provided access to the existing or predicted custom metrics collected via telemetry. The auto-scaler may compare metrics against the thresholds to make scaling decisions. The metrics may include CPU load, network throughput, power, or other metrics collected by telemetry. In some examples, metrics expressing the SLO of the application instances may be used.

An orchestrator scheduler may be used via plugins, which are used to combine new or scaled up application instances into a subset of available nodes in the edge cluster. When the application instance requirements may not be satisfied with the existing nodes in the edge cluster, the new or scaled up application instance may remain pending until a new node is added.

The orchestrator application instance replication controller may be used to select application instances to scale down, for example on a "last-in, first-out" basis, nodes with least co-located pods, or according to another scale down scheme. The orchestrator application instance replication control may be used to remove application instances from newly added nodes or free up some nodes, making them under-utilized and available for removal from the cluster by the node instance auto-scaler.

An edge node instance auto-scaler may be used to check for pending application instances, and scale up node instances where required. When there are no pending instances, the edge node instance auto-scaler may watch for nodes that are not utilized, or under-utilized, and try to scale down those nodes. The edge node instance auto-scaler may interface with the edge provider device to scale the nodes. The edge node auto-scaler may communicate with the edge provider device to select appropriate nodes that satisfy the pending application instances requirements. Before a scale-in, the application instances may be migrated to other nodes within the same edge cluster in some examples.

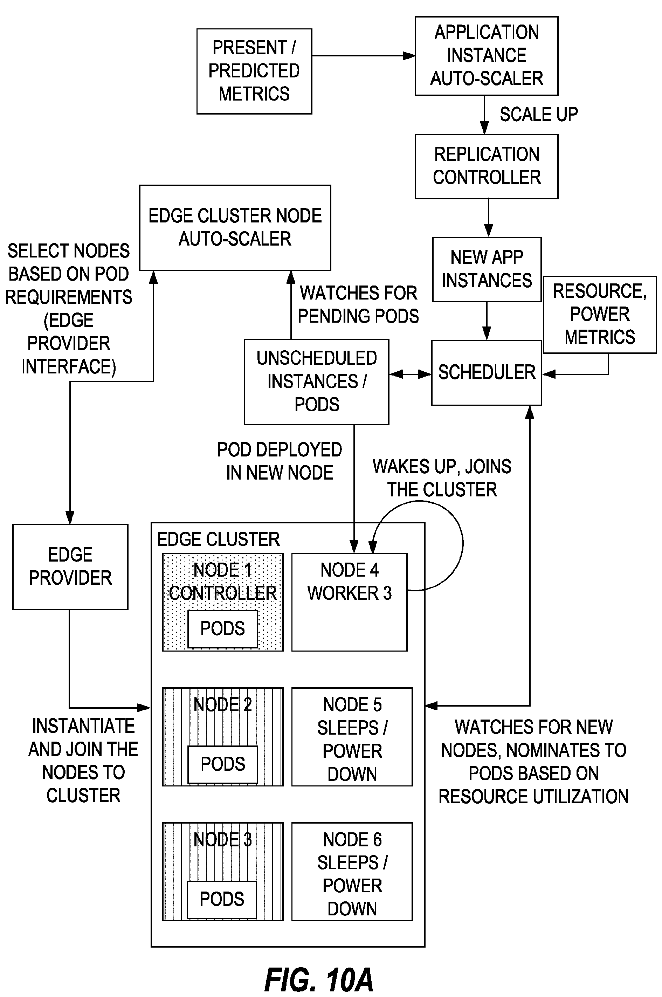

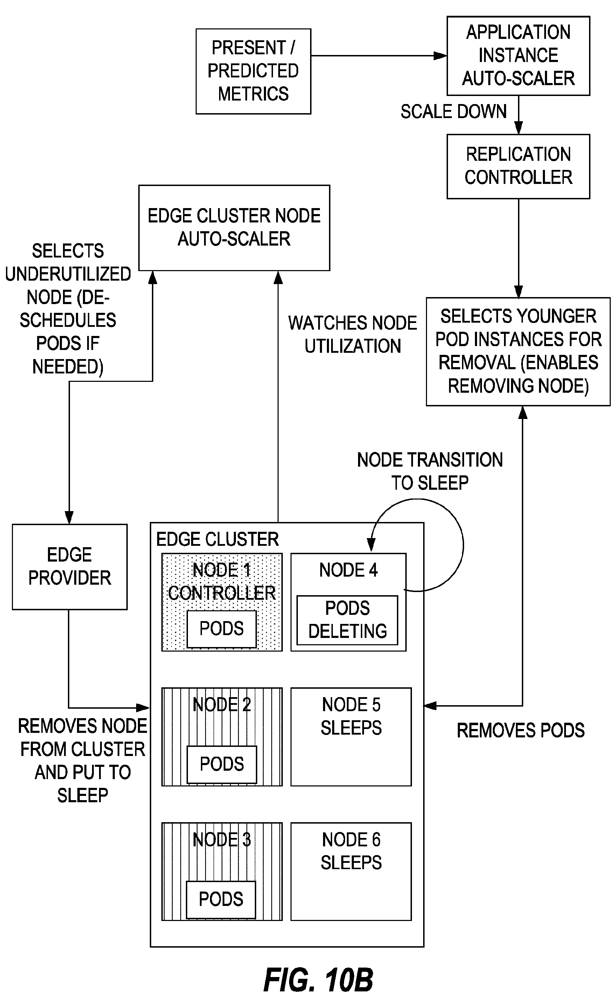

FIGS. 10A-10B illustrate example edge cluster management block diagrams in accordance with some embodiments. FIG. 10A illustrates a scale up edge cluster management block diagram and FIG. 10B illustrates a scale down edge cluster management block diagram. In some examples, both scale up and scale down may occur in a single management update of operation of an edge cluster. The scale up or scale down may occur based on execute needs.

FIGS. 10A-10B include an edge provider device for preparing and managing the nodes of the edge cluster. The edge provider device may be part of an edge management software component responsible for management and maintenance of the edge cluster. The edge provider device may communicate with an edge cluster node auto-scaler. The edge node instance auto-scaler may use a standard API to talk to the edge provider device to add or remove nodes to or from the edge cluster. The edge node instance auto-scaler may obtain a current configuration of the edge cluster from the edge provider device. A REST interface may be used between the two, such that these components may be run anywhere in the network.

The edge provider device may group the nodes based on capabilities and features of the nodes, for example to create "nodegroups". For example, nodes with specific hardware accelerators, CPU cores etc., may be grouped into each nodegroup. The edge provider device may provide a resource template to the edge node instance auto-scaler.

The node instance auto-scaler may use a template during scale up to identify a nodegroup from which the nodes are to be selected to satisfy requirements of a pending application instances in the cluster (e.g., an application instance to be scheduled).

During the scale up or down, the edge provider device may place a node into one or more sleep modes (e.g., different p- or c-states) or complete power down. This may be policy driven and configurable. P-states or c-states may correspond to different operational power levels of the node or a component of the node. For example, p-states may reduce power consumption of a CPU based on frequency or voltage scaling. P-states may vary depending on CPU used. C-states may include configurations where one or more components are turned off or have reduced power (e.g., a GPU).

A Service Level Objective (SLO) management may be used for the scale up or scale down operations. The auto-scaler may satisfy the SLOs associated with application instances by allocating the application instances to nodes, and optionally scaling up or down nodes. To manage the SLOs and determine whether a scale up or down may occur while not violating the SLOs of the overall application, machine learned models may be used that describe the behavior. These models allow for predicting of whether a potential scale up or down is needed or may violate the SLOs and hence the SLA in place. Models for this may be either be handcrafted or machine learned, or other techniques like using proportional-integral-derivative (PID) controllers can be used as well.

The edge auto-scaler may use metrics collected via telemetry to determine whether a threshold has been traversed necessitating a scale up or scale down. When a threshold (e.g., from a range) is traversed, the workload instance auto-scaler may scale nodes up or down as needed. Current or predicted metrics may be used to determine whether to scale up or down. The predicted metrics may be based on application instances that are pending to be scheduled or predicted to be pending in a at a future time. The application instances may be provided in a format that the workload instance auto-scaler may use for making scaling decisions.

When scaling up, an orchestrator application instance controller may watch the scale up event and create multiple workload instances. The orchestrator scheduler, as it watches the newly created application instances, may run a series of filtering or scoring plugins to identify candidate nodes to run those instances. In addition to the default scheduling criteria, the orchestrator may attempt to satisfy additional objectives.

The scheduler may be used to attempt to pack the instances into a subset of nodes in the edge cluster (e.g., existing powered up or to be powered up or a combination of nodes), rather than spreading them across multiple nodes. This enables power saving in the edge cluster. Other policies may be configured in some examples. The scheduler, in addition to or instead of the above criteria, may balance the allocation of multiple resource requirements (e.g., CPU, memory, etc.,) of the application instances across the enabled nodes.

The above criteria may be used to ensure nodes have balanced resource usage rate across multiple resources. This avoids a situation in which certain types of resources are exhausted, while other resources are abundant in a node, rendering it non-schedulable. When the scheduler finds appropriate nodes, the nodes may be assigned to the application instances, and the corresponding node agents may instantiate them. Otherwise, the application instances may remain in an un-scheduled (e.g., pending) state.

The edge node instance auto-scaler may be an external component to the edge cluster, in some examples. When an un-scheduled pending application instances is identified, the auto-scaler may run a series of algorithms to determine an appropriate node configuration and node count required to run the pending application instances. The node instance auto-scaler may communicate with the edge provider device to obtain node availability info and corresponding node capabilities, for example based on which it can identify the nodes to be added to the cluster, to run the pending application instances. The node instance auto-scaler may request the edge provider device (e.g., using the edge provider interface) instantiate or create a selected numbers of nodes for an appropriate nodegroup. The edge provider device may prepare the requested number of nodes and join those nodes to the cluster.

FIG. 10B illustrates scale down for the edge cluster. During scale down, which as described above, may occur with scale up, the application instance auto-scaler may determine which nodes to scale down. The scale down may be initiated when an existing or predicted metric traverses a threshold value, for example during a specified period of time. The orchestrator application instance controller may select an instance that is to be removed, based on rules or criteria. The rules or criteria may include removing or scaling down pending application instances rather than running instances. The rules or criteria may include selecting a most recently started application instance for removal. Since the scheduler packed the application instances into a subset of nodes during scale up, in some examples, this selection for deletion may result in nodes with few or no running application instances. These nodes may be removed from the cluster and put to sleep or powered down for maximum power savings. The node agent may stop or remove selected application instances from the nodes. The stopped or removed application instances may be migrated to other nodes in the same edge, in some examples.

The edge node instance auto-scaler may periodically check for nodes that are under-utilized. The edge node instance auto-scaler may run a series of checks to identify nodes that are removable. Application instances may be identified that may be relocated to other nodes. The edge node instance auto-scaler may use criteria such as first selecting nodes not running any application instances for removal, or selecting a node with a minimum number of application instances. Other nodes may be identified to which these instances maybe migrated, for example with minimum cost. Once the removal nodes are identified, they may be marked as non-schedulable to prevent any new applications from being scheduled. The auto-scalars may make explicit de-schedule instructions to remove applications from those nodes. The orchestrator scheduler may schedule the application instances that were removed at other available nodes in the cluster. This may result in packing the application instances to a smaller number of nodes in the cluster.

The edge node instance auto-scaler may invoke the edge provider interface to remove the selected nodes (either multiple empty nodes or a single non-empty node if available at a time). In an example loop, the edge node waits for a cooling period, and then performs the procedure to identify and remove the next node from the cluster.

In some examples, rather than a complete scale down, a node may be placed into a different power state, particularly in consideration of taxing the system with a number of reboots or shutdowns, which may cause harm on the system. A node that is in a lower power state but not deactivated may be ready faster for new workload instances.

The edge cluster auto-scaler or node instance autoscaler supports migrating container workloads from (e.g., least loaded) nodes, for example with consideration for high availability, to the other nodes in the cluster that have capacity to handle those workloads. The edge cluster auto-scaler may work with the edge provider device to put those released nodes to low power modes or complete power down state. The actions, such as powering down, putting the nodes into sleep mode etc., may be policy driven and configurable.

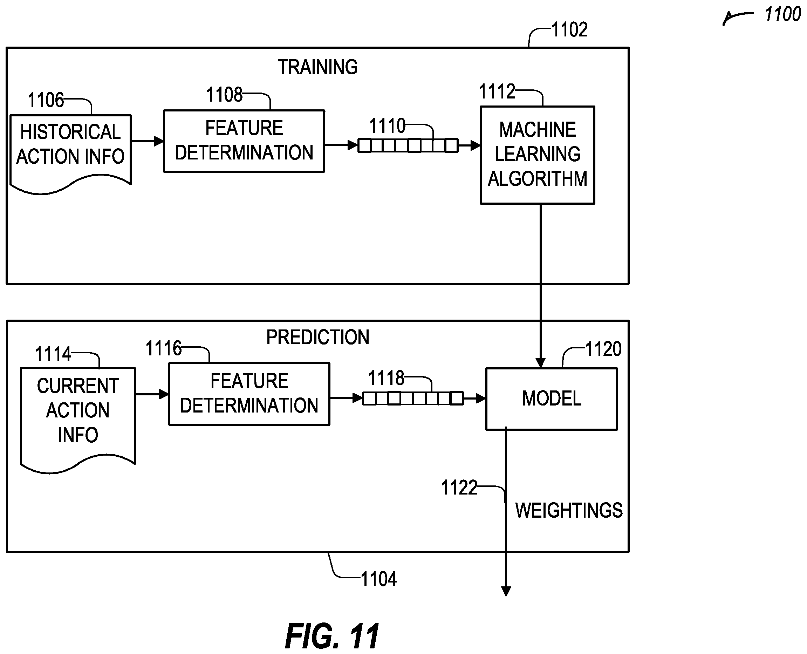

FIG. 11 illustrates a machine learning engine 1100 for adaptive power management in accordance with some embodiments. A system may calculate one or more weightings for criteria based upon one or more machine learning algorithms. FIG. 11 shows an example machine learning engine 1100 according to some examples of the present disclosure. Machine learning engine 1100 may be implemented on an edge device, an orchestrator device, a server, or the like.

Machine learning engine 1100 utilizes a training engine 1102 and a prediction engine 1104. Training engine 1102 inputs historical information 1106, such as power usage, historical power availability, battery usage, application instances instantiated, component usage data, completion metric data, node usage, edge cluster configuration, priority of a task, component, or resource, SLO or SLA, or the like. The historical information 1106 may include information gathered or related to actions of an edge cluster. The historical information 1106 may be fed into feature determination engine 1108.

Feature determination engine 1108 determines one or more features 1110 from this historical information 1106. Stated generally, features 1110 are a set of the information input and is information determined to be predictive of a particular outcome. Example features are given above. In some examples, the features 1110 may be all the historical activity data, but in other examples, the features 1110 may be a subset of the historical activity data. The machine learning algorithm 1112 produces a model 1120 based upon the features 1110 and the labels.

In the prediction engine 1104, current action information 1114 (e.g., active nodes, SLA parameters, available nodes, power needed for an application instance, scheduling information, etc.) may be input to the feature determination engine 1116. Feature determination engine 1116 may determine the same set of features or a different set of features from the current information 1114 as feature determination engine 1108 determined from historical information 1106. In some examples, feature determination engine 1116 and 1108 are the same engine. Feature determination engine 1116 produces feature vector 1118, which is input into the model 1120 to generate one or more criteria weightings 1122. In some examples, the training engine 1102 may operate in an offline manner to train the model 1120. The prediction engine 1104 may be designed to operate in an online manner. It should be noted that the model 1120 may be periodically updated via additional training or user feedback (e.g., an update to power generation or usage estimations or a new type of workload). Updating may include reinforced learning.

In another example, the training engine 1102 may be run in an online manner. For example, the training engine 1102 may train the prediction engine 1104 on the fly, such as in real time or near real time (e.g., online). When training online, a base model may be used, which may be modified based on one or more particular aspects of a system for prediction. The particular aspects may include location, operating details, type of device, or the like. The particular aspects may be incorporated in the training via side input or updating a model. The training engine 1102 may personalize a trained model (when training online or offline) to a specific device, circumstance, system, or technique. The prediction engine 1104 may be run offline in some examples as well.

The machine learning algorithm 1112 may be selected from among many different potential supervised or unsupervised machine learning algorithms. Examples of supervised learning algorithms include artificial neural networks, Bayesian networks, instance-based learning, support vector machines, decision trees (e.g., Iterative Dichotomiser 3, C4.5, Classification and Regression Tree (CART), Chi-squared Automatic Interaction Detector (CHAID), and the like), random forests, linear classifiers, quadratic classifiers, k-nearest neighbor, linear regression, logistic regression, and hidden Markov models. Examples of unsupervised learning algorithms include expectation-maximization algorithms, vector quantization, and information bottleneck method. Unsupervised models may not have a training engine 1102. In an example embodiment, a regression model is used and the model 1120 is a vector of coefficients corresponding to a learned importance for each of the features in the vector of features 1110, 1118.

Once trained, the model 1120 may output an estimation of node need, for example to indicate activation or powering up of a node or nodes in an edge cluster or to remove or power down a node or nodes in the edge cluster. The output may be generated based on a particular period of time, time of day, month, season, time of year, set of unscheduled application instances, or the like.

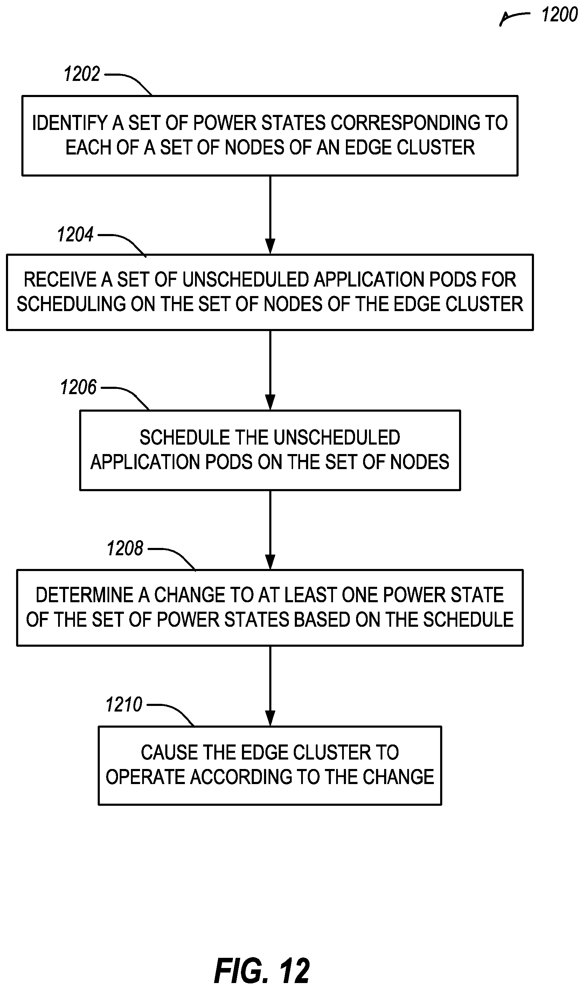

FIG. 12 illustrates a flowchart showing a technique 1200 for using an edge device to control power states of nodes in an edge cluster in accordance with some embodiments. The technique 1200 may be performed by an edge device, such as using memory to store instructions for execution by processing circuitry. The edge device may be part of the edge cluster (e.g., a node in the cluster, such as a controller node) or separate from the edge cluster, such as an orchestrator device. In an example, the edge device and the edge cluster may be co-located in a same physical housing or unit (e.g., a base station housing, server blade, rack unit, etc.).

The technique 1200 includes an operation 1202 to identify power state information corresponding to resources available on each of a set of nodes of an edge cluster. The technique 1200 includes an operation 1204 to receive an indication of unscheduled application pods for scheduling on the set of nodes of the edge cluster. The indication of unscheduled applications may include an identifier of an unscheduled application, a resource needed to execute the unscheduled application, and at least one service level requirement for execution of the unscheduled application.

The technique 1200 includes an operation 1206 to schedule the unscheduled application pods on the set of nodes. Operation 1206 may include changing a node of at least one already scheduled application pod to minimize fully powered nodes in the edge cluster (e.g., moving from one node to another in the edge cluster).

The technique 1200 includes an operation 1208 to determine a change to at least one power state for the power state information based on the schedule. In an example, the change may include at least one of activating a node from a powered off state or deactivating a node to the powered off state. In some examples, the change to the at least one power state includes at least one of changing a node to power state to cause a resource (e.g., a CPU) to enter a power state, such as operating in a p-state or c-state. A p-state may include a state where voltage or frequency are changed for a resource (e.g., a processor) to reduce the power consumption of the resource. A c-state may include a state where functions of a resource are turned on or off or reduced. The node may be changed to the p-state or c-state from a deactivated or a fully powered state. The change to the at least one power state may include a change in power source for a node from a non-renewable energy source to a renewable energy source based on a battery level for the node. In another example, the change to the at least one power state may include a change from a node operating with a non-renewable energy source to a node operating a renewable energy source. The change may include lowering a power state of a node of the set of nodes based on an identification that the node is operating using a non-renewable energy source and an application pod scheduled on the node is schedulable on a second node operating using a renewable energy source. In this example, the application pod may be rescheduled on the node operating using the renewable energy source (e.g., before lowering the power state of the node). The change may include maintaining a same number of active nodes in the edge cluster while deactivating at least one node (e.g., activating one node while deactivating another node, such that the net nodes operating in the edge cluster remain the same).

The technique 1200 includes an operation 1210 to cause the edge cluster to operate according to the change. Operation 1210 may include moving an application pod off of a node, causing the node to be reconfigured to a different power state, and moving the application pod back to the node.

The technique 1200 may include scheduling application pods and determining power state changes for a plurality of edge clusters. The technique 1200 may include retrieving a list of node groups, nodes of the node groups arranged based on capabilities of the nodes. In this example, the technique 1200 may include selecting a node operating at less than fully powered from a particular node group based on a required capability of one of the unscheduled application pods and increasing power to the node according to the required capability.

It should be understood that the functional units or capabilities described in this specification may have been referred to or labeled as components or modules, in order to more particularly emphasize their implementation independence. Such components may be embodied by any number of software or hardware forms. For example, a component or module may be implemented as a hardware circuit comprising custom very-large-scale integration (VLSI) circuits or gate arrays, off-the-shelf semiconductors such as logic chips, transistors, or other discrete components. A component or module may also be implemented in programmable hardware devices such as field programmable gate arrays, programmable array logic, programmable logic devices, or the like. Components or modules may also be implemented in software for execution by various types of processors. An identified component or module of executable code may, for instance, comprise one or more physical or logical blocks of computer instructions, which may, for instance, be organized as an object, procedure, or function. Nevertheless, the executables of an identified component or module need not be physically located together but may comprise disparate instructions stored in different locations which, when joined logically together (e.g., including over a wire, over a network, using one or more platforms, wirelessly, via a software component, or the like), comprise the component or module and achieve the stated purpose for the component or module.

Indeed, a component or module of executable code may be a single instruction, or many instructions, and may even be distributed over several different code segments, among different programs, and across several memory devices or processing systems. In particular, some aspects of the described process (such as code rewriting and code analysis) may take place on a different processing system (e.g., in a computer in a data center) than that in which the code is deployed (e.g., in a computer embedded in a sensor or robot). Similarly, operational data may be identified and illustrated herein within components or modules and may be embodied in any suitable form and organized within any suitable type of data structure. The operational data may be collected as a single data set or may be distributed over different locations including over different storage devices, and may exist, at least partially, merely as electronic signals on a system or network. The components or modules may be passive or active, including agents operable to perform desired functions.

Although these implementations have been described with reference to specific exemplary aspects, it will be evident that various modifications and changes may be made to these aspects without departing from the broader scope of the present disclosure. Many of the arrangements and processes described herein can be used in combination or in parallel implementations to provide greater bandwidth/throughput and to support edge services selections that can be made available to the edge systems being serviced. Accordingly, the specification and drawings are to be regarded in an illustrative rather than a restrictive sense. The accompanying drawings that form a part hereof show, by way of illustration, and not of limitation, specific aspects in which the subject matter may be practiced. The aspects illustrated are described in sufficient detail to enable those skilled in the art to practice the teachings disclosed herein. Other aspects may be utilized and derived therefrom, such that structural and logical substitutions and changes may be made without departing from the scope of this disclosure. This Detailed Description, therefore, is not to be taken in a limiting sense, and the scope of various aspects is defined only by the appended claims, along with the full range of equivalents to which such claims are entitled.

Such aspects of the inventive subject matter may be referred to herein, individually and/or collectively, merely for convenience and without intending to voluntarily limit the scope of this application to any single aspect or inventive concept if more than one is in fact disclosed. Thus, although specific aspects have been illustrated and described herein, it should be appreciated that any arrangement calculated to achieve the same purpose may be substituted for the specific aspects shown. This disclosure is intended to cover any and all adaptations or variations of various aspects. Combinations of the above aspects and other aspects not specifically described herein will be apparent to those of skill in the art upon reviewing the above description.

Method examples described herein may be machine or computer-implemented at least in part. Some examples may include a computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitory, or non-volatile tangible computer-readable media, such as during execution or at other times. Examples of these tangible computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

## Claims

1. An edge device comprising:
memory including instructions; and
processing circuitry to implement an edge provider device and to execute the instructions including operations to:
identify (1202) power state information corresponding to resources available on each of a set of nodes of an edge cluster;
receive (1204) an indication of unscheduled applications for scheduling on the set of nodes of the edge cluster;
schedule (1206) the unscheduled applications to execute on the set of nodes;
determine (1208) a change to at least one power state of a node from the set of nodes based on the schedule,
**characterised in that** the change to the at least one power state includes lowering a power state of a node of the set of nodes based on an identification that the node is operating using a non-renewable energy source and wherein the lowering the power state of the node comprises causing a resource of the node to reduce power consumption based at least one of a frequency or voltage scaling of the resource; and
cause (1210) the edge cluster to operate according to the change.

2. The edge device of claim 1, wherein the change includes at least one of activating the node from a powered off state or deactivating the node to the powered off state.

3. The edge device of claim 1, wherein to schedule the unscheduled applications, the edge provider device is further to change the node of at least one already scheduled application to minimize fully powered nodes.

4. The edge device of claim 1, wherein the processing circuitry is further to:
retrieve a list of node groups, wherein nodes of the node groups are arranged based on capabilities of the nodes;
select a node operating at less than fully powered from a particular node group based on a required capability of one of the unscheduled applications; and
increase power to the node according to the required capability.

5. The edge device of claim 1, wherein the processing circuitry is further to schedule applications and determine power state changes for a plurality of edge clusters of a network.

6. The edge device of claim 1, wherein the change to the at least one power state includes a change in power source for the node from a non-renewable energy source to a renewable energy source based on a battery level for the node.

7. The edge device of claim **1,** wherein the change to the at least one power state includes lowering a power state of the node of the set of nodes based on an identification that the node is operating using a non-renewable energy source and an application scheduled on the node is capable of being scheduled on a second node operating using a renewable energy source.

8. The edge device of claim 1, wherein the change to the at least one power state includes maintaining a same number of active nodes in the edge cluster while deactivating at least one node.

9. The edge device of claim **1,** wherein the change to the at least one power state includes a change to a resource power state of the node.

10. The edge device of claim **1,** wherein to cause the edge cluster to operate according to the change, the processing circuitry is further to move an application off of the node, cause the node to be reconfigured to a different power state, and move the application back to the node.

11. The edge device of any of claims **1-10,** wherein the edge device is a second node of the edge cluster.

12. The edge device of any of claims **1-10,** wherein the indication of unscheduled applications includes an identifier of an unscheduled application, a resource needed to execute the unscheduled application, and at least one service level requirement for execution of the unscheduled application.

13. The edge device of any of claims 1-10, wherein the edge device and the edge cluster are co-located in a same physical housing or unit.

14. A method for using processing circuitry of an edge device, the method comprising:
identifying (1202) power state information corresponding to resources available on each of a set of nodes of an edge cluster;
receiving (1204) an indication of unscheduled applications for scheduling on the set of nodes of the edge cluster;
scheduling (1206) the unscheduled applications to execute on the set of nodes;
determining (1208) a change to at least one power state of a node from the set of nodes based on the schedule,
**characterised in that** the change to the at least one power state includes lowering a power state of a node of the set of nodes based on an identification that the node is operating using a non-renewable energy source and wherein the lowering the power state of the node comprises causing a resource of the node to reduce power consumption based at least one of a frequency or voltage scaling of the resource; and
causing (1210) the edge cluster to operate according to the change.

## Patentansprüche

1. Edge-Vorrichtung, umfassend:
einen Speicher, der Anweisungen beinhaltet; und
Verarbeitungsschaltungsanordnung zum Implementieren einer Edge-Providervorrichtung und zum Ausführen der Anweisungen einschließlich Operationen zum:
Identifizieren (1202) von Leistungszustandsinformationen, die Ressourcen entsprechen, die auf jedem eines Satzes von Knoten eines Edge-Clusters verfügbar sind;
Empfangen (1204) einer Angabe von ungeplanten Anwendungen zum Planen auf dem Satz von Knoten des Edge-Clusters;
Planen (1206) der ungeplanten Anwendungen zum Ausführen auf dem Satz von Knoten;
Bestimmen (1208) einer Änderung des mindestens einen Leistungszustands eines Knotens aus dem Satz von Knoten basierend auf der Planung,
**dadurch gekennzeichnet, dass** die Änderung des mindestens einen Leistungszustands das Absenken eines Leistungszustands eines Knotens des Satzes von Knoten basierend auf einer Feststellung beinhaltet, dass der Knoten unter Verwendung einer nicht erneuerbaren Energiequelle arbeitet, und wobei das Absenken des Leistungszustands des Knotens das Veranlassen einer Ressource des Knotens zum Reduzieren des Leistungsverbrauchs basierend auf einer Frequenz- und/oder Spannungsskalierung der Ressource umfasst; und Bewirken (1210), dass der Edge-Cluster gemäß der Änderung arbeitet.

2. Edge-Vorrichtung nach Anspruch 1, wobei die Änderung das Aktivieren des Knotens aus einem ausgeschalteten Zustand und/oder das Deaktivieren des Knotens in den ausgeschalteten Zustand beinhaltet.

3. Edge-Vorrichtung nach Anspruch 1, wobei zum Planen der ungeplanten Anwendungen die Edge-Providervorrichtung ferner dazu dient, den Knoten mindestens einer bereits geplanten Anwendung zu ändern, um die Anzahl vollständig mit Leistung versorgter Knoten zu minimieren.

4. Edge-Vorrichtung nach Anspruch 1, wobei die Verarbeitungsschaltungsanordnung ferner zu Folgendem dient:
Abrufen einer Liste von Knotengruppen, wobei Knoten der Knotengruppen basierend auf Fähigkeiten der Knoten angeordnet sind;
Auswählen eines Knotens, der mit weniger als voller Leistung versorgt wird, aus einer bestimmten Knotengruppe basierend auf einer erforderlichen Fähigkeit einer der ungeplanten Anwendungen; und
Erhöhen der Leistung für den Knoten gemäß der erforderlichen Fähigkeit.

5. Edge-Vorrichtung nach Anspruch 1, wobei die Verarbeitungsschaltungsanordnung ferner dazu dient, Anwendungen zu planen und Leistungszustandsänderungen für eine Mehrzahl von Edge-Clustern eines Netzwerks zu bestimmen.

6. Edge-Vorrichtung nach Anspruch 1, wobei die Änderung des mindestens einen Leistungszustands eine Änderung der Leistungsquelle für den Knoten von einer nicht erneuerbaren Energiequelle zu einer erneuerbaren Energiequelle basierend auf einem Batterieladezustand für den Knoten beinhaltet.

7. Edge-Vorrichtung nach Anspruch 1, wobei die Änderung des mindestens einen Leistungszustands ein Absenken eines Leistungszustands des Knotens des Satzes von Knoten basierend auf einer Feststellung beinhaltet, dass der Knoten unter Verwendung einer nicht erneuerbaren Energiequelle arbeitet, und eine auf dem Knoten geplante Anwendung in der Lage ist, auf einem zweiten Knoten geplant zu werden, der unter Verwendung einer erneuerbaren Energiequelle arbeitet.

8. Edge-Vorrichtung nach Anspruch 1, wobei die Änderung des mindestens einen Leistungszustands das Aufrechterhalten einer gleichen Anzahl von aktiven Knoten in dem Edge-Cluster beinhaltet, während mindestens ein Knoten deaktiviert wird.

9. Edge-Vorrichtung nach Anspruch 1, wobei die Änderung des mindestens einen Leistungszustands eine Änderung eines Ressourcenleistungszustands des Knotens beinhaltet.

10. Edge-Vorrichtung nach Anspruch 1, wobei zum Bewirken, dass der Edge-Cluster gemäß der Änderung arbeitet, die Verarbeitungsschaltungsanordnung ferner dazu dient, eine Anwendung von dem Knoten zu verschieben, zu bewirken, dass der Knoten in einen anderen Leistungszustand rekonfiguriert wird, und die Anwendung zurück auf den Knoten zu verschieben.

11. Edge-Vorrichtung nach einem der Ansprüche 1-10, wobei die Edge-Vorrichtung ein zweiter Knoten des Edge-Clusters ist.

12. Edge-Vorrichtung nach einem der Ansprüche 1-10, wobei die Angabe ungeplanter Anwendungen eine Kennung einer ungeplanten Anwendung, eine Ressource, die zum Ausführen der ungeplanten Anwendung benötigt wird, und mindestens eine Dienstebenenanforderung zur Ausführung der ungeplanten Anwendung beinhaltet.

13. Edge-Vorrichtung nach einem der Ansprüche 1-10, wobei die Edge-Vorrichtung und der Edge-Cluster gemeinsam in demselben physischen Gehäuse oder derselben physischen Einheit angeordnet sind.

14. Verfahren zum Verwenden einer Verarbeitungsschaltungsanordnung einer Edge-Vorrichtung, wobei das Verfahren Folgendes umfasst:
Identifizieren (1202) von Leistungszustandsinformationen, die Ressourcen entsprechen, die auf jedem eines Satzes von Knoten eines Edge-Clusters verfügbar sind;
Empfangen (1204) einer Angabe von ungeplanten Anwendungen zum Planen auf dem Satz von Knoten des Edge-Clusters;
Planen (1206) der ungeplanten Anwendungen zum Ausführen auf dem Satz von Knoten;
Bestimmen (1208) einer Änderung mindestens eines Leistungszustands eines Knotens aus dem Satz von Knoten basierend auf der Planung,
**dadurch gekennzeichnet, dass** die Änderung des mindestens einen Leistungszustands das Absenken eines Leistungszustands eines Knotens des Satzes von Knoten basierend auf einer Feststellung beinhaltet, dass der Knoten unter Verwendung einer nicht erneuerbaren Energiequelle arbeitet, und wobei das Absenken des Leistungszustands des Knotens das Veranlassen einer Ressource des Knotens zum Reduzieren des Leistungsverbrauchs basierend auf einer Frequenz- und/oder Spannungsskalierung der Ressource umfasst; und
Bewirken (1210), dass der Edge-Cluster gemäß der Änderung arbeitet.

## Revendications

1. Dispositif périphérique, comprenant :
une mémoire comportant des instructions ; et
une circuiterie de traitement pour mettre en œuvre un dispositif de fournisseur périphérique et pour exécuter les instructions incluant des opérations pour :
identifier (1202) des informations d'état de puissance correspondant à des ressources disponibles sur chacun d'un ensemble de nœuds d'une grappe périphérique ;
recevoir (1204) une indication d'applications non planifiées pour la planification sur l'ensemble de nœuds de la grappe périphérique ;
planifier (1206) les applications non planifiées à exécuter sur l'ensemble de nœuds ;
déterminer (1208) un changement d'au moins un état de puissance d'un nœud parmi l'ensemble de nœuds sur la base de la planification,
**caractérisé en ce que** le changement de l'au moins un état de puissance inclut le fait d'abaisser un état de puissance d'un nœud de l'ensemble de nœuds sur la base d'une identification que le nœud est en fonctionnement en utilisant une source d'énergie non renouvelable et dans lequel le fait d'abaisser l'état de puissance du nœud comprend le fait d'amener une ressource du nœud à réduire la consommation de puissance sur la base d'au moins une d'une mise à échelle de fréquence ou de tension de la ressource ; et
amener (1210) la grappe périphérique à fonctionner selon le changement.

2. Dispositif périphérique de la revendication 1, dans lequel le changement inclut au moins un fait parmi le fait d'activer le nœud à partir d'un état mis hors tension ou le fait de désactiver le nœud à l'état mis hors tension.

3. Dispositif périphérique de la revendication 1, dans lequel, pour planifier les applications non planifiées, le dispositif de fournisseur périphérique doit en outre changer le nœud d'au moins une application déjà planifiée pour minimiser des nœuds complètement mis sous tension.

4. Dispositif périphérique de la revendication 1, dans lequel la circuiterie de traitement doit en outre :
récupérer une liste de groupes de nœuds, dans lequel des nœuds des groupes de nœuds sont agencés sur la base de capacités des nœuds ;
sélectionner un nœud fonctionnant à moins que l'état complètement mis sous tension parmi un groupe de nœuds particulier sur la base d'une capacité requise d'une des applications non planifiées ; et
augmenter la puissance au nœud selon la capacité requise.

5. Dispositif périphérique de la revendication 1, dans lequel la circuiterie de traitement doit en outre planifier des applications et déterminer des changements d'état de puissance pour une pluralité de grappes périphériques d'un réseau.

6. Dispositif périphérique de la revendication 1, dans lequel le changement de l'au moins un état de puissance inclut un changement de source de puissance pour le nœud, d'une source d'énergie non renouvelable à une source d'énergie renouvelable, sur la base d'un niveau de batterie pour le nœud.

7. Dispositif périphérique de la revendication 1, dans lequel le changement de l'au moins un état de puissance inclut le fait d'abaisser un état de puissance du nœud de l'ensemble de nœuds sur la base d'une identification que le nœud est en fonctionnement en utilisant une source d'énergie non renouvelable et une application planifiée sur le nœud est capable d'être planifiée sur un second nœud fonctionnant en utilisant une source d'énergie renouvelable.

8. Dispositif périphérique de la revendication 1, dans lequel le changement de l'au moins un état de puissance inclut le fait de maintenir un même nombre de nœuds actifs dans la grappe périphérique durant le fait de désactiver au moins un nœud.

9. Dispositif périphérique de la revendication 1, dans lequel le changement de l'au moins un état de puissance inclut un changement d'un état de puissance de ressource du nœud.

10. Dispositif périphérique de la revendication 1, dans lequel, pour amener la grappe périphérique à fonctionner selon le changement, la circuiterie de traitement doit en outre retirer une application du nœud, amener le nœud à être reconfiguré à un état de puissance différent, et remettre l'application sur le nœud.

11. Dispositif périphérique de quelconques des revendications 1 à 10, dans lequel le dispositif périphérique est un second nœud de la grappe périphérique.

12. Dispositif périphérique de quelconques des revendications 1 à 10, dans lequel l'indication d'applications non planifiées inclut un identifiant d'une application non planifiée, une ressource nécessaire pour exécuter l'application non planifiée, et au moins une condition de niveau de service pour l'exécution de l'application non planifiée.

13. Dispositif périphérique de quelconques des revendications 1 à 10, dans lequel le dispositif périphérique et la grappe périphérique sont conjointement positionnés dans un même logement ou une même unité physique.

14. Procédé pour utiliser une circuiterie de traitement d'un dispositif périphérique, le procédé comprenant les faits :
identifier (1202) des informations d'état de puissance correspondant à des ressources disponibles sur chacun d'un ensemble de nœuds d'une grappe périphérique ;
recevoir (1204) une indication d'applications non planifiées pour la planification sur l'ensemble de nœuds de la grappe périphérique ;
planifier (1206) les applications non planifiées à exécuter sur l'ensemble de nœuds ;
déterminer (1208) un changement d'au moins un état de puissance d'un nœud parmi l'ensemble de nœuds sur la base de la planification,
**caractérisé en ce que** le changement de l'au moins un état de puissance inclut le fait d'abaisser un état de puissance d'un nœud de l'ensemble de nœuds sur la base d'une identification que le nœud est en fonctionnement en utilisant une source d'énergie non renouvelable et dans lequel le fait d'abaisser l'état de puissance du nœud comprend le fait d'amener une ressource du nœud à réduire la consommation de puissance sur la base d'au moins une d'une mise à échelle de fréquence ou de tension de la ressource ; et
amener (1210) la grappe périphérique à fonctionner selon le changement.
